(19) Europäisches Patentamt
European Patent Office
Office européen des brevets

(11) EP 3 818 129 B1

(12) **FASCICULE DE BREVET EUROPEEN**

(45) Date de publication et mention de la délivrance du brevet:
**18.12.2024 Bulletin 2024/51**

(21) Numéro de dépôt: **19733536.7**

(22) Date de dépôt: **02.07.2019**

(51) Classification Internationale des Brevets (IPC):
***C09K 8/528*** *(2006.01)* ***C08F 2/22*** *(2006.01)*
***C08F 2/38*** *(2006.01)* ***C08F 220/18*** *(2006.01)*
***C08F 220/56*** *(2006.01)* ***C09K 8/88*** *(2006.01)*
***C08F 293/00*** *(2006.01)*

(52) Classification Coopérative des Brevets (CPC):
**C08F 2/22; C08F 2/38; C08F 293/005; C09K 8/528; C09K 8/882;** C08F 220/1812; C08F 2438/03; C09K 2208/22; C09K 2208/32

(86) Numéro de dépôt international:
**PCT/EP2019/067683**

(87) Numéro de publication internationale:
**WO 2020/007828 (09.01.2020 Gazette 2020/02)**

(54) **RELARGAGE PROGRESSIF DE CHAÎNES POLYMÈRES EN MILIEU LIQUIDE**

PROGRESSIVE AUSSALZUNG VON POLYMERKETTEN IN EINEM FLÜSSIGEN MEDIUM

PROGRESSIVE SALTING-OUT OF POLYMER CHAINS IN A LIQUID MEDIUM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.07.2018 FR 1856076**

(43) Date de publication de la demande:
**12.05.2021 Bulletin 2021/19**

(73) Titulaire: **Energy Solutions (US) LLC**
**Princeton, NJ 08540 (US)**

(72) Inventeurs:
- **LABARRE, Dominique**
**92200 NEUILLY SUR SEINE (FR)**
- **WILSON, David James**
**60580 COYE LA FORET (FR)**

(74) Mandataire: **Osha BWB**
**2, rue de la Paix**
**75002 Paris (FR)**

(56) Documents cités:
**EP-A1- 2 457 973** **WO-A1-2013/060741**
**CN-A- 106 349 115** **JP-A- 2014 162 912**
**US-A1- 2005 028 976**

- **TUNCABOYLU DENIZ C ET AL: "Autonomic self-healing in covalently crosslinked hydrogels containing hydrophobic domains", POLYMER, vol. 54, no. 23, 2 October 2013 (2013-10-02), pages 6381 - 6388, XP028743710, ISSN: 0032-3861, DOI: 10.1016/J.POLYMER.2013.09.051**
- **HUA YU ET AL: "Amphiphilic Thermosensitive N-Isopropylacrylamide Terpolymer Hydrogels Prepared by Micellar Polymerization in Aqueous Media", MACROMOLECULES, vol. 27, no. 16, 1 August 1994 (1994-08-01), US, pages 4554 - 4560, XP055592732, ISSN: 0024-9297, DOI: 10.1021/ma00094a019**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

La présente invention a trait à une méthode permettant d'assurer un relargage progressif de chaînes polymères, telles que des chaînes utiles à titre d'inhibiteurs de formation de dépôts inorganiques ou organiques (inhibiteurs de tartre) au sein d'un milieu liquide, typiquement au sein des milieux liquides employés dans l'extraction pétrolière, à savoir les milieu liquides, notamment d'origine naturelle, rencontrés lors d'opérations d'extraction pétrolières.

Lors de l'extraction du pétrole hors d'un réservoir hydrocarboné (réservoir pétrolifère telle qu'une formation rocheuse, consolidée ou non, ou un sable, par exemple), différents facteurs peuvent induire l'apparition de dépôts, dont il est important d'inhiber la formation, pour éviter des phénomènes d'obstruction de la formation souterraine (roche et/ou puits), qui conduisent à un ralentissement, voire à un arrêt de la production. Différents types de dépôts peuvent se former au sein d'un réservoir hydrocarboné, comme des tartres (dépôts essentiellement inorganiques à base de carbonate de calcium, sulfate de baryum, sulfate de strontium, sulfate de calcium et/ou fluorure de calcium).

Afin d'éviter la formation de ces dépôts, il a été préconisé d'employer des inhibiteurs qui sont soit injectés en continu dans les puits mais ne protège pas la formation souterraine proche du puits, soit placés sous pression dans la formation souterraine selon une étape dite étape de « squeeze » et permettent alors de protéger la zone réservoir.

Cependant, en règle générale, cette méthode ne permet pas de protéger le puits et la formation sur la durée, et les inhibiteurs doivent être renouvelés souvent (les inhibiteurs peuvent, lors des opérations de squeeze, former *in situ* des sortes de systèmes de relargage dans la roche réservoir et conduire à un relargage progressif (à ce sujet, on pourra notamment se reporter à GB2298440, US 2006124301, US7196040, US7244693, ou US20050028976), mais la vitesse et l'intensité en sont difficilement contrôlables, avec notamment un temps de relargage en général court, typiquement de l'ordre de quelques jours à quelques semaines). La nécessité du renouvellement des inhibiteurs pénalise la productivité étant donné que le puits est mis à l'arrêt pendant l'étape de placement (« squeeze »).

JP 2014 162912 décrit un procédé permettant de dissoudre progressivement les particules de polymère présentes dans un revêtement pour les carènes de bateau. Les particules de polymère sont constituées d'une résine comprenant un monomère soluble dans l'eau alcaline et un monomère associatif hydrophobe.

WO 2013/060741 A1 décrit un copolymère séquencé obtenu selon un procédé qui comprend une étape de polymérisation radicalaire micellaire dans laquelle on met en contact, au sein d'un milieu aqueux des monomères hydrophiles, solubilisés ou dispersés dans ledit milieu aqueux et des monomères hydrophobes sous la forme d'une solution micellaire.

EP 2 457 973 A1 décrit des copolymères, préparés par une réaction de copolymérisation micellaire, qui sont solubles dans l'eau et porteurs de chaînes latérales hydrophobes. Ces copolymères sont utilisés comme additifs dans le développement, l'exploitation et l'achèvement de réservoirs souterrains de pétrole et de gaz.

US 2005/028976 A1 divulgue des procédés et des compositions pour le traitement d'une formation souterraine permettant de créer et d'utiliser des particules sur lesquelles sont absorbés des agents de traitement et qui sont revêtues par un matériau de revêtement dégradable.

CN 106 349 115 A divulgue un gel polymérique réticulé de manière covalente contenant des monomères hydrophobes et hydrophiles obtenus par polymérisation radicale micellaire, et qui est utilisé dans les fluides de forage

L'industrie pétrolière cherche de ce fait à remplacer ces opérations de squeeze, en particulier dans les productions issues d'opérations de fracturations hydrauliques où des matériaux granulaires (proppants, gravel packs) sont mis en place afin d'optimiser la circulation de fluides.

A cet effet, on cherche notamment à développer des systèmes permettant un relargage progressif d'inhibiteurs au cours du temps, avec comme objectif de relarguer les inhibiteurs sur une période couvrant la vie du puits (à savoir plusieurs années) et à une concentration supérieure à leur MIC (pour l'anglais « Minimum Inhibition Concentration » désignant la concentration minimum assurant l'inhibition dans les conditions d'un puits donné).

Il a été proposé d'employer des matériaux polymères réticulés à base de chaînes polymères anti-tartres (polyacrylates notamment) préformées, puis réticulées entre elles par des ponts réticulants hydrolysables de type ester ou amide, typiquement par réaction des fonctions carboxylates des chaînes avec un polyol ou une polyamine (US5060728, US7332459, US7473672 notamment) ou des composés organométalliques (US 2015/0060062).

La présente invention propose une nouvelle méthode permettant d'assurer un relargage progressif de chaînes polymères telles que des inhibiteurs du type précité. La méthode de l'invention met en oeuvre des objets, typiquement de type granulaires, comprenant une multitude de chaînes à relarguer qui sont initialement réticulées entre elles et qui vont être progressivement relarguées au cours du temps. Elle concerne également les compositions de chaînes polymères réticulées employées dans ce cadre.

Plus précisément, selon un premier aspect, la présente invention a pour objet une méthode de relargage progressif de chaînes polymères au sein d'un milieu liquide de relargage (MLR), ladite méthode comprenant une étape (E) où on met en contact ledit milieu (MLR) avec des objets solides formés par des chaînes polymères solubles dans le milieu (MLR) et porteuses de groupements latéraux hydrophobes assurant une réticulation physique hydrophobe-hydrophobe entre lesdites chaînes polymères au sein desdits objets solides,

dans laquelle le milieu (MLR) est un milieu aqueux où les chaînes polymères relarguées sont hydrosolubles,

dans laquelle les objets solides employés dans l'étape (E) sont issus d'une étape (E0) de polymérisation radicalaire micellaire dans laquelle on met en contact, au sein d'un milieu aqueux (M) :

- des monomères (m1) éthyléniquement insaturés, solubilisés ou dispersés dans ledit milieu aqueux (M) ;
- des monomères (m2) hydrophobes éthyléniquement insaturés, sous la forme d'une solution micellaire, à savoir contenant, à l'état dispersé au sein du milieu (M), des micelles comprenant ces monomères hydrophobes, lesdits monomères (m2) étant, en tout ou partie, des monomères porteurs de chaînes hydrophobes propres à assurer la réticulation physique hydrophobe-hydrophobe recherchée dans les objets solides employés dans l'étape (E);
- au moins un amorceur de polymérisation radicalaire, de préférence hydrosoluble ou hydrodispersible ; et
- au moins un agent de contrôle de polymérisation radicalaire, l'agent de contrôle de polymérisation radicalaire étant un composé comprenant au moins un groupe thiocarbonylthio -S(C=S), par exemple un xanthate ;

dans laquelle les monomères employés dans l'étape (E0) contiennent des monomères (mR) comprenant au moins deux insaturations éthyléniques séparées par au moins un groupement clivable, le groupement clivable étant sélectionné parmi de groupes divalents -ester- ; -amide- ; -éther- ; - éther phosphate- ; - éther sulfate; carbonate; et carbamate; et

dans laquelle le rapport molaire (mR)/(m1), qui correspond à la quantité de monomères réticulants (mR) rapportée à la quantité totale de monomères hydrophiles est supérieur à 2%.

Le relargage progressif a lieu depuis les objets solides vers le milieu de relargage MLR.

Au sens de la présente description, on entend par « réticulation physique », par opposition à une réticulation chimique, une association réversible non covalente entre deux groupements.

Lors de l'étape (E) de la présente invention, du fait du caractère réversible de la réticulation physique, les chaînes polymères sont progressivement relarguées depuis les objets solides vers le milieu (MLR). Notamment en jouant sur la nature et le nombre des groupements latéraux hydrophobes assurant la réticulation physique, on peut aisément moduler la vitesse et l'intensité du relargage. L'emploi de groupe hydrophobes assurant une réticulation physique permet en général d'obtenir des cinétiques de relargage relativement longue, mais avec une intensité suffisante aux températures employées dans le cadre d'opération d'extraction pétrolière.

Selon un autre aspect, la présente invention a pour objet les compositions originales à base de polymères réticulés constitutives des objets utilisés dans le cadre de l'étape (E), à savoir les compositions comprenant des chaînes polymères hydrosolubles et porteuses de groupements latéraux hydrophobes assurant une réticulation physique hydrophobe-hydrophobe entre lesdites chaînes polymères.

Typiquement, et en particulier lorsqu'elles sont destinées à assurer un rôle d'inhibiteur, les chaînes polymères relarguées lors de l'étape (E) ont une masse moléculaire moyenne en nombre comprise entre 500 et 100 000 g/mol, de préférence entre 1 000 et 25 000 g/mol.

La masse moléculaire est mesurée par GPC MALS.

Le milieu (MLR) où les chaînes polymère sont relarguées lors de l'étape (E) est un milieu aqueux, où les chaînes polymères relarguées sont hydrosolubles.

Les chaînes polymères solubles constituant les objets solides employés dans l'étape (E) sont issues d'une étape (E0) de polymérisation radicalaire micellaire dans laquelle on met en contact, au sein d'un milieu aqueux (M) :

- des monomères (m1) éthyléniquement insaturés, solubilisés ou dispersés dans ledit milieu aqueux (M), dits « monomères hydrophiles » ;

- des monomères (m2) hydrophobes éthyléniquement insaturés, sous la forme d'une solution micellaire, dits « monomères hydrophobes » à savoir contenant, à l'état dispersé au sein du milieu (M), des micelles comprenant ces monomères hydrophobes, lesdits monomères (m2) étant, en tout ou partie, porteurs de chaînes hydrophobes propres à assurer la réticulation physique hydrophobe-hydrophobe recherchée dans les objets solides employés dans l'étape (E);

- au moins un amorceur de polymérisation radicalaire, de préférence hydrosoluble ou hydrodispersible ; et

- au moins un agent de contrôle de polymérisation radicalaire, l'agent de contrôle de polymérisation radicalaire étant un composé comprenant au moins un groupe thiocarbonylthio -S(C=S), par exemple un xanthate.

En général, le rapport molaire (m2)/(m1), qui correspond à la quantité de monomères hydrophobes (m2) rapportée à la quantité de monomères hydrophiles (m1), est inférieur à 10%. Typiquement, ce rapport molaire est compris entre 0,1% et 5%, par exemple entre 0,2 et 3%. Selon un mode intéressant, ce rapport est compris entre 0,4% et 2%

Dans la cadre de la présente invention, une étape (E1) est généralement conduite après l'étape (E0), où les polymères obtenus à l'issue de l'étape (E0) sont extrudés et séchés (et broyés si besoin), ce par quoi on obtient les polymères sous forme de objets solides granulaires.

Selon un mode de réalisation, les polymères obtenus sont typiquement sous la forme de particules de dimensions inférieures à 4 mm, plus préférentiellement inférieures à 3 mm et typiquement supérieures à 50 $\mu$m et plus préférentiellement supérieures à 100 $\mu$m. La taille des particules obtenus peut être mesurée par exemple par la granulométrie par tamisage.

On peut utiliser les moyens d'extrusion, broyages et séchages traditionnels connus de l'homme de métier. A titre d'exemple, on peut citer, les techniques d'extrusion à vis, le séchage en lit fluide et le broyage par broyeurs à broches, broyeurs à marteaux, broyeur à boulet, broyage par jet d'air. Ces techniques peuvent optionnellement être mises en oeuvre selon le mode cryo-broyage.

Le milieu aqueux (M) employé dans l'étape (E0) est un milieu comprenant de l'eau, de préférence à hauteur d'au moins 50% en masse, voire au moins 80%, par exemple au moins 90%, voire au moins 95% en masse. Ce milieu aqueux peut éventuellement comprendre d'autres solvants que l'eau, par exemple un alcool miscible à l'eau. Ainsi, le milieu (M) peut être par exemple un mélange hydro-alcoolique.

Selon une variante possible, le milieu (M) peut comprendre d'autres solvants, de préférence en une concentration où ledit solvant est miscible à l'eau, ce qui peut notamment permettre de réduire la quantité de tensioactifs stabilisants employés. Ainsi, par exemple, le milieu (M) peut comprendre du pentanol, ou tout autre additif permettant de moduler le nombre d'agrégation des tensioactifs. De façon générale, il est préférable que le milieu (M) soit une phase continue d'eau et constituée d'un ou plusieurs solvants et/ou additifs miscibles entre eux et dans l'eau dans les concentrations où ils sont employés.

Un autre avantage des objets solides de la présente invention est qu'ils sont faciles à préparer et faciles à manipuler dans l'application finale.

Les monomères employés dans l'étape (E0) contiennent des monomères (mR) comprenant au moins deux insaturations éthyléniques séparées par au moins un groupement clivable (dits « réticulants chimiques clivables »).

L'emploi de réticulants chimiques clivables s'avère tout particulièrement intéressant pour faciliter la mise en forme des compositions polymères à l'issue de l'étape (E0). La présence de ces réticulants chimiques clivables permet notamment d'obtenir un gel structuré (désigné également ci-après par le terme de « macrogel ») à l'issue de l'étape (E0), qui peut ensuite être mis en forme par exemple sous forme d'objets solides granulaires selon l'étape (E1) précitée.

Notamment de façon à obtenir une réticulation suffisante, le rapport molaire (mR)/(m1), qui correspond à la quantité de monomères réticulants (mR) rapportée à la quantité totale de monomères hydrophiles est supérieur à 2%. Ce rapport est supérieur à 3%, voire à 5% lorsqu'on cherche une réticulation particulièrement importante. Néanmoins, notamment compte tenu de problèmatique de coûts, il est en général préférable que le rapport molaire (mR)/(m1) reste inférieur ou égal à 30%, préférentiellement inférieur ou égal à 20%, voire inférieur ou égal à 10%. Un rapport molaire (mR)/(m1) compris entre 2% et 10% constitue ainsi, en général, un compromis satisfaisant.

Par « groupement clivable », on entend, au sens de la présente description, un groupement au moins divalent, présent au sein d'une chaîne, qui est stable au moins dans certaines conditions de pH et de température, mais qui est lysé, en induisant une coupure de chaîne, lorsqu'il est soumis à une température supérieure à une température limite (clivage thermique) et/ou lorsqu'il est placé dans des conditions spécifiques de pH (clivage induit par pH). La lyse du (ou des) groupe(s) clivable(s) présent(s) sur la chaîne s'effectue de préférence de façon irréversible et sans lyser le reste de la chaîne.

Les groupes clivables présents sur les chaînes polymères sont en général identiques à ceux présents sur les monomères (mR) et il s'agit typiquement de groupes divalents -ester - ; - amide - ; - éther - ; - éther phosphate - ; ou bien encore - éther sulfate, ou bien carbonate ou carbamate. Selon un mode de réalisation intéressant, il s'agit de groupes ester ou amide, notamment d'une fonction ester. En général, les compositions polymères sont synthétisées dans des conditions de pH et de température où lesdits groupements clivables sont stables.

On préfère en général que les monomères m1 ne soient pas porteurs de groupements clivables,

Concernant les monomères m2, selon un mode de réalisation possible, ces monomères m2 sont porteurs de groupements clivables. Cependant, selon un autre mode envisageable, les monomères m2 ne sont pas porteurs de groupements clivable, en particulier des groupements clivables du type précité.

Les groupes clivables présents dans les objets solides de l'invention sont autant de « fragilités » qui induisent une perte progressive de la réticulation lorsque les objets solides sont soumis à des conditions de température et/ou de pH induisant le clivage. Les conditions de température requises sont typiquement obtenues lorsque les objets solides de l'invention sont injectés au sein du milieu (MLR) et les conditions de pH peuvent être obtenues à tout moment, au besoin par injection d'une base ou d'un acide pour obtenir le pH de clivage.

La méthode de l'invention permet, en fonction des conditions de température et de pH régnant au sein de la formation souterraine où l'utilisation des objets solides est envisagée, d'adapter la composition polymère employée, de façon à obtenir le profil de relargage souhaité. La vitesse de libération peut être adaptée en jouant sur :

- la nature des groupements hydrophobes (plus l'association hydrophobe-hydrophobe sera faible, plus rapide sera le relargage) et ;
- le nombre des groupements latéraux hydrophobes ainsi que leur enchaînement dans la chaine polymérique (nombre d'unités par bloc d'hydrophobe) (la vitesse de relargage sera d'autant plus faible que ces groupements latéraux seront nombreux).

La vitesse de libération peut être en plus adaptée en jouant sur :

- la nature du groupe clivable sur les monomères réticulants chimiques (plus le groupe sera fragile, plus rapide sera le relargage) et ;
- sur le nombre de monomères réticulants chimiques dans la chaîne polymère (la vitesse de relargage sera d'autant plus faible que ces monomères réticulants seront nombreux).

Bien que la méthode de relargage de l'invention puisse être employée pour effectuer un relargage progressif de divers types de chaînes polymères, le procédé s'avère avant tout particulièrement adapté au relargage de chaînes polymères qui sont des chaînes polymères utiles à titre d'agent anti-tartre, anti-clathrate, et/ou anti-corrosion.
Ainsi, selon un mode intéressant, que les chaînes polymères relarguées dans l'étape (E) soient à base de monomères capables de fournir un effet anti-tartre, anti-clathrate, et/ou anti-corrosion.
En particulier, il est tout particulièrement intéressant de conduire l'étape (E) pour relarguer des chaînes polymères à base d'acide polyacrylique.
Par ailleurs, la méthode de l'invention est tout particulièrement adaptée au domaine de l'extraction pétrolière et un milieu (MLR) avantageux pour l'étape (E) est par conséquent un milieu liquide (typiquement salé) rencontré lors de l'extraction de pétrole au sein d'un réservoir hydrocarboné.
La méthode de l'invention est tout particulièrement adaptée à des températures correspondant à celles employées dans des opérations pétrolières. Ainsi, l'étape (E) est de préférence conduite à une température supérieure ou égale à 50 °C, généralement inférieure à ou égale à 150°C, par exemple entre 60°C et 120°C.

**Polymérisation radicalaire micellaire**

Par "polymérisation radicalaire micellaire", on entend au sens de la présente description une polymérisation qui sera aussi désignée par "polymérisation micellaire" à des fins de concision dans la suite de la description, dans laquelle on synthétise des polymères séquencés de type multiblocs par copolymérisation de monomères hydrophiles et de monomères hydrophobes au sein d'un milieu dispersant aqueux (typiquement de l'eau ou un mélange eau/alcool) qui comprend :

- les monomères hydrophiles à l'état solubilisé ou dispersé dans ledit milieu ;
  et

- les monomères hydrophobes présents au sein de micelles.

Les micelles employées en polymérisation micellaire sont formées dans le milieu aqueux par un tensioactif formant ces micelles, qui est introduit dans ledit milieu à une concentration supérieure à sa concentration micellaire critique (cmc) en présence des monomères hydrophiles dans le milieu (M).
Selon un mode particulier, les monomères hydrophobes présents au sein de micelles employés en polymérisation micellaire peuvent être des monomères qui, en eux-mêmes ont la propriété de former des micelles, sans avoir pour ce faire besoin d'ajouter des agents tensioactifs additionnels (ces monomères sont dits «automicellisables» dans la suite de la description). Selon ce mode particulier, le tensioactif employé pour former les micelles peut être le monomère hydrophobe auto-micellisable lui-même employé sans autre tensioactif, mais la présence d'un tensioactif additionnel n'est cependant pas exclue lorsqu'on emploie des monomères auto-micellisables.
Ainsi, au sens de la présente description, lorsqu'il est fait mention de « monomères hydrophobes au sein de micelles», cette notion englobe notamment :

- mode 1 : des monomères hydrophobes présents au sein de micelles formées par des agents tensioactifs, où lesdits agents tensioactifs sont distincts des monomères hydrophobes ; et /ou

- mode 2 : des monomères auto-micellisables formant par eux-mêmes des micelles en milieu aqueux, avec des micelles qui peuvent alors être formées en tout ou partie par lesdits monomères auto-micellisables.

Les modes 1 et 2 précités sont compatibles et peuvent coexister (monomères hydrophobes non auto-micellisables au sein de micelles formées par un autre monomère auto-micellisable par exemple ; ou bien encore micelles comprenant une association d'agents tensioactifs et de monomères auto-micellisables).

En polymérisation micellaire, les monomères hydrophobes contenus dans les micelles sont dits en "solution micellaire". La solution micellaire à laquelle il est fait référence est un système micro-hétérogène qui est généralement isotrope, optiquement transparent et thermodynamiquement stable.

A noter qu'une solution micellaire du type de celle employée en polymérisation micellaire est à distinguer d'une microémulsion. En particulier, contrairement à une microémulsion, une solution micellaire se forme à toute concentration dépassant la concentration micellaire critique du tensioactif employé, avec comme seule condition que le monomère hydrophobe soit soluble au moins en une certaine mesure au sein de l'espace interne des micelles. Une solution micellaire se différencie par ailleurs d'une émulsion de par l'absence de phase homogène interne : les micelles contiennent un très faible nombre de molécules (moins de 1000 typiquement, en général moins de 500 et typiquement de 1 à 100, avec le plus souvent 1 à 50 monomères et au plus quelques centaine de molécules de tensioactif lorsqu'un tensioactif est présent) et la solution micellaire a en général des propriétés physiques similaires à celles des micelles de tensioactif sans monomères. Par ailleurs le plus souvent, une solution micellaire est transparente vis-à-vis de la lumière visible, compte tenu de la faible taille des micelles qui ne conduit pas à des phénomènes de réfraction, contrairement aux gouttes d'une émulsion, qui réfractent la lumière et lui confère son aspect trouble ou blanc caractéristique.

La technique de polymérisation micellaire conduit à des polymères séquencés caractéristiques qui contiennent chacun plusieurs blocs hydrophobes sensiblement de même taille et où cette taille peut être contrôlée. En effet, compte tenu du cantonnement des monomères hydrophobes au sein des micelles, chacun des blocs hydrophobes formés et de taille contrôlé et contient sensiblement un nombre $n_H$ défini de monomères hydrophobe, ce nombre $n_H$ pouvant être calculé comme suit (Macromolecular Chem. Physics, 202, 8, 1384-1397, 2001) :

$$n_H = N_{agg} \,.\, [M_H] / ( [\text{tensioactif}] - \text{cmc})$$

où :

*$N_{agg}$* est le numéro d'agrégation (nombre d'agrégation) du tensioactif, qui reflète le nombre de tensioactif présent dans chaque micelle

$[M_H]$ est la concentration molaire en monomère hydrophobe dans le milieu et [tensioactif] est la concentration molaire en tensioactif dans le milieu cmc est la concentration (molaire) micellaire critique

La technique de polymérisation micellaire permet ainsi un contrôle intéressant des motifs hydrophobes introduit dans les polymères formés, à savoir :

- un contrôle global de la fraction molaire d'unités hydrophobes dans le polymère (en modulant le rapport des concentrations des deux monomères); et
- un contrôle plus spécifique du nombre d'unités hydrophobes présentes dans chacun des blocs hydrophobes (en modifiant les paramètres influençant le $n_H$ défini ci-dessus).

Les polymères obtenus en polymérisation micellaire sont des polymères séquencés amphiphiles qui possèdent une structure maîtrisée spécifique, à savoir, schématiquement, à base d'un squelette formé d'unités hydrophiles (hydrosolubles ou hydrodispersdibles) interrompu en différents endroits par des petites séquences hydrophobes, ces séquences hydrophobes ("blocs hydrophobes") étant toutes de nombre d'unités monomères sensiblement identiques.

Dans la mesure où les monomères particuliers (mR) sont employés dans l'étape (E0), les chaînes polymères obtenues selon l'invention sont en outre réticulées. Les compositions de polymères obtenus à l'étape (E0) se présentent de ce fait sous forme d'un gel réticulé chimiquement.

Les compositions de polymères selon l'invention sont des polymères tels qu'obtenus selon une étape (E0) de polymérisation radicalaire micellaire qui est spécifiquement une polymérisation radicalaire de type contrôlée, à savoir conduite en présence d'un agent de contrôle de la polymérisation radicalaire. Par *"agent de contrôle de polymérisation radicalaire"* (ou plus simplement *"agent de contrôle*"), on entend, au sens de la présente description, un composé capable de rallonger le temps de vie des chaînes polymères en croissance dans une réaction de polymérisation et, de préférence, de conférer à la polymérisation un caractère vivant ou contrôlé.

Lorsqu'un agent de contrôle de polymérisation radicalaire du type précité est employé, en plus des avantages liés à la mise en oeuvre de la polymérisation micellaire, il s'avère possible de contrôler la masse moléculaire moyenne des polymères tels qu'obtenus à l'issue de l'étape (E0) : cette masse peut être contrôlée par la quantité d'agent de contrôle utilisée (pour une quantité donnée de monomères hydrophiles, la masse diminue généralement à mesure que cette quantité augmente).

Ainsi, les compositions polymères à l'issue de l'étape (E0) présentent une masse molaire moyenne contrôlée.

De façon connue en soi, dans l'étape (E0), le rapport massique (agent de contrôle)/(m1+m2) calculé par le rapport de la masse d'agent de contrôle rapportée à la masse totale de monomères dicte la masse moléculaire obtenue pour le polymère synthétisé. Ce rapport est avantageusement compris entre 0,2% et 42% en masse dans l'étape (E0), par exemple entre 1% et 25% en masse, notamment entre 5% et 20% en masse.

Selon un mode de réalisation intéressant de l'invention, dans l'étape (E0), la concentration initiale en agent de contrôle dans le milieu est choisie telle que la masse moléculaire moyenne du polymère synthétisé est Mn inférieure ou égale à 100 000 g/mol, préférablement entre 500 et 50 000 g/mol, par exemple entre 1 000 et 25 000 g/mol.

Selon la présente description, l'agent de contrôle employé dans l'étape (E0) est un agent de transfert réversible tel que par exemple mis en oeuvre dans les polymérisations radicalaires contrôlées désignés sous la terminologie RAFT ou MADIX, qui mettent typiquement en oeuvre un procédé de transfert réversible par addition-fragmentation, comme ceux décrits par exemple dans WO96/30421, WO 98/01478, WO 99/35178, WO 98/58974, WO 00/75207, WO 01/42312, WO 99/35177, WO 99/31144, FR2794464 ou WO 02/26836.

Lorsqu'un agent de contrôle de polymérisation radicalaire de type réversible est employé, les polymères tels qu'obtenus à l'issue de l'étape (E0) présentent, en plus des avantages liés à la mise en oeuvre de la polymérisation micellaire (à savoir le contrôle de la fraction molaire d'unités hydrophobe dans les polymères ; et un contrôle du nombre d'unités hydrophobes dans chaque séquence hydrophobe) :

- un contrôle de la masse moléculaire moyenne (qui peut être finement contrôlée par la quantité d'agent de contrôle utilisé : pour une quantité donnée de monomères hydrophiles, la masse diminue à mesure que cette quantité augmente) ; et

- un contrôle de la distribution des blocs hydrophobes au sein des différentes chaînes

- l'obtention de chaînes polymères à caractère vivant, offrant la possibilité de préparer des polymères complexes à architecture contrôlée.

Ces avantages sont tout particulièrement marqués lorsque l'agent de contrôle de polymérisation radicalaire employé est un composé soluble ou dispersible dans le milieu aqueux (M) employé dans l'étape (E0), et/ou lorsque cet agent de contrôle n'est pas propre à pénétrer dans les micelles de la solution micellaire. Cet effet peut également être observé dans le cas où l'agent de contrôle n'est pas soluble/dispersible dans le milieu (M) ou lorsque l'agent de contrôle est propre à pénétrer dans les micelles.

Ainsi, les macrogels à l'issue de l'étape (E0) présentent, en plus d'une masse molaire moyenne finement contrôlée, une homogénéité de la répartition de points de réticulation.

Selon un mode particulier, l'agent de contrôle employé dans l'étape (E0) peut être une chaîne polymère issue d'une polymérisation radicalaire contrôlée et porteuse d'un groupement propre à contrôler une polymérisation radicalaire (chaîne polymère dite de type « vivante », de type bien connu en soi). Ainsi, par exemple, l'agent de contrôle peut être une chaîne polymère (de préférence hydrophile ou hydrodispersible) fonctionnalisée en bout de chaîne par un groupe xanthate ou plus généralement comprenant un groupe - SC=S-, par exemple obtenu selon la technologie RAFT/MADIX.

Alternativement, l'agent de contrôle employé dans l'étape (E0) est un composé non polymère porteur d'au moins un groupement assurant le contrôle de la polymérisation radicalaire, à savoir un groupe thiocarbonylthio -S(C=S)-.

L'agent de contrôle de polymérisation radicalaire employé dans l'étape (E0) est un composé qui comprend au moins un groupe thiocarbonylthio -S(C=S)-. Ainsi, par exemple, il peut s'agir d'un composé qui comprend un groupe xanthate (porteur de fonctions -SC=S-O-), par exemple un xanthate. D'autres types d'agent de contrôle employés en polymérisation radicalaire contrôlée peuvent être envisagés.

La mise en oeuvre d'un agent de contrôle de l'étape (E0) de ce type dans la réaction de polymérisation permet de maîtriser finement la taille des chaînes polymères et la masse moléculaire et dans le cas où les monomères mR sont employés le taux de réticulation, ce qui permet de moduler de façon très fine et très précise les propriétés de la composition polymère. Elle induit en outre une homogénéité dans la composition du polymère synthétisé, ce qui permet d'obtenir à l'issue de l'étape (E1) des particules qui présentent toutes sensiblement les mêmes compositions et propriétés.

Selon une variante particulière, l'agent de contrôle de polymérisation radicalaire employé dans l'étape (E0) est un polymère, avantageusement un oligomère, à caractère hydrosoluble ou hydrodispersible et porteur d'un groupe thiocarbonylthio -S(C=S)-, par exemple d'un groupe xanthate -SC=S-O-). Ce polymère, propre à agir à la fois comme

agent de contrôle de la polymérisation et comme monomère dans l'étape (E0), est également désigné par « pré-polymère » dans la suite de la description. Typiquement, ce pré-polymère est obtenu par polymérisation radicalaire de monomères hydrophiles en présence d'un agent de contrôle porteur d'un groupe thiocarbonylthio -S(C=S)-, par exemple un xanthate. Ainsi, par exemple, selon un mode de réalisation intéressant qui est illustré à la fin de la présente description, l'agent de contrôle employé dans l'étape (E0) peut avantageusement être un pré-polymère porteur d'un groupe thiocarbonylthio - S(C=S)-, par exemple d'un groupe xanthate -SC=S-O-, obtenu à l'issue d'une étape (E0°) de polymérisation radicalaire contrôlée préalable à l'étape (E0). Dans cette étape (E0°), on peut typiquement mettre en contact des monomères hydrophiles, avantageusement identiques à ceux mis en oeuvre dans l'étape (E0) ; un amorceur de polymérisation radicalaire ; et un agent de contrôle porteur d'un groupe thiocarbonylthio -S(C=S)-, par exemple un xanthate.

La mise en oeuvre de l'étape (E0°) précité préalablement à l'étape (E0) permet, schématiquement, d'hydrophiliser un grand nombre d'agent de contrôle porteurs de fonctions thiocarbonylthio (par exemple des xanthates, qui sont plutôt hydrophobes par nature), en les convertissant en des pré-polymères solubles ou dispersibles dans le milieu (M) de l'étape (E0). De préférence, un pré-polymère synthétisé dans l'étape ($E0^0$) possède une chaîne polymère courte, par exemple comprenant un enchaînement de moins de 50, voire moins de 25 unités monomères, par exemple entre 2 et 15.

Différentes caractéristiques et modes de réalisation de l'invention vont maintenant être décrits encore plus en détails.

**Les monomères hydrophiles (m1)**

Un très grand nombre de monomères hydrophiles peut être employé dans l'étape (E0) décrit ci-dessus.

Typiquement, les monomères peuvent comprendre des monomères choisis parmi :

- les acides carboxyliques éthyléniquement insaturés, les acides sulfoniques et les acides phosphoniques, et/ou ses dérivés tels que l'acide acrylique (AA), l'acide méthacrylique, le sipomer Beta CEA (vendu par Solvay) l'acide éthacrylique, l'acide α-chloro-acrylique, l'acide crotonique, l'acide maléique, l'anhydride maléique, l'acide itaconique, l'acide citraconique, l'acide mésaconique, l'acide glutaconique, l'acide aconitique, l'acide fumarique, les monoesters d'acides dicarboxyliques monoéthyléniquement insaturés comportant 1 à 3, de préférence 1 à 2, atomes de carbone, par exemple, le maléate de monométhyl, l'acide vinylsulfonique, l'acide (meth)allylsulfonique, l'acrylate de sulfoéthyl, le méthacrylate de sulfoéthyl, l'acrylate de sulfopropyl, le méthacrylate de sulfopropyl, l'acide 2-hydroxy-3-acryloyloxypropylsulfonique, l'acide 2-hydroxy-3-methacryloyloxypropylsulfonique, les acides styrenesulfoniques, l'acide 2-acrylamido-2-methylpropanesulfonique, l'acide vinylphosphonique, l'acide α-methyl vinylphosphonique et l'acide allylphosphonique ;
- les esters d'acides mono- et di-carboxyliques α,β-éthyléniquement insaturés avec C2-C3-alcanediols, par exemple, l'acrylate de 2-hydroxyethyl, le méthacrylate de 2-hydroxyethyl, l'acrylate de 2-hydroxypropyl, le méthacrylate de 2-hydroxypropyl, l'acrylate de 3-hydroxypropyl, le méthacrylate de 3-hydroxypropyl et les (meth)acrylates de polyalkylène glycol ; et les amides alkylés correspondants ;
- les amides d'acides mono-carboxyliques α,β-éthyléniquement insaturés et leurs dérivés N-alkyl et N,N-dialkyl tels que l'acrylamide, le méthacrylamide, le N-méthyl(meth)acrylamide, le N-ethyl(meth)acrylamide, le N-propyl(meth) acrylamide, le N,N-dimethyl(meth)acrylamide, le N,N-diethyl(meth)acrylamide, le morpholinyl(meth)acrylamide, et le metholyl acrylamide (l'acrylamide et le N,N-dimethyl(meth)acrylamide s'avèrent notamment intéressant), et les ammonium quaternaires alkylés correspondants ;
- le N-vinyllactames et ses dérivés, par exemple, le N-vinylpryolidone, le N-vinylpiperidone ;
- les composés N-vinylamide à chaînes ouvertes, par exemple, le N-vinylformamide, le N-vinyl-N-methylformamide, le N-vinylacetamide, le N-vinyl-N-methylacetamide, le N-vinyl-N-ethylacetamide, le N-vinylpropionamide, le N-vinyl-N-methylpropionamide et le N-vinylbutyramide ;
- les esters d'acides mono- et di-carboxyliques α,β-éthyléniquement insaturés avec les aminoalcools, par exemple, le (meth)acrylate de N,N-diméthylaminométhyl, le (meth)acrylate de N,N-dimethylaminoethyl, l'acrylate de N,N-diéthylaminoéthyl, et le (meth)acrylate de N,N-dimethylaminopropyl;
- les amides d'acides mono- et di-carboxyliques α,β-éthyléniquement insaturés avec les diamines comprenant au moins un groupe d'amino primaire ou secondaire, tels que le N-[2-(dimethylamino)ethyl]acrylamide, le N[2-(dimethylamino)ethyl]methacrylamide, le N-[3-(dimethylamino)propyl]acrylamide, le N-[3-(dimethylamino)propyl]methacrylamide, le N-[4-(dimethylamino)butyl]acrylamide et le N-[4-(dimethylamino)butyl]methacrylamide ; leurs produits d'alkylation (ammonium quaternaires)
- les N-diallylamines, les N,N-diallyl-N-alkylamines, leurs sels d'additions d'acide et leurs produits de quaternisation, l'alkyl employé ici étant préférentiellement C1-C3-alkyle ;
- les composés du N,N-diallyl-N-methylamine et du N,N-diallyl-N,N-dimethylammonium, par exemple, les chlorures et les bromures ;

- les hétérocycles azotés substitutés de vinyle et d'allyle, par exemple, le N-vinylimidazole, le N-vinyl-2-methylimidazole, les composés hétéroaromatiques substitués de vinyle et d'allyle, par exemple, le 2- et 4-vinylpyridine, le 2- et 4-allylpyridine, et leurs sels ;
- les monomères portant des groupements sulphobétaines ; et
- les mélanges et association de deux ou plusieurs des monomères précités.

Selon un mode de réalisation particulier, ces monomères peuvent notamment comprendre de l'acide acrylique (AA). Selon un mode de réalisation possible, les monomères sont tous des acides acryliques, mais il est également envisageable de mettre en oeuvre à titre de monomères un mélange comprenant, entre autres, de l'acide acrylique, en mélange avec d'autres monomères hydrophiles.

Les monomères contenant des groupes acides peuvent être utilisés pour la polymérisation sous la forme de l'acide libre ou sous la forme partiellement ou totalement neutralisée. Pour la neutralisation, on peut utiliser, par exemple, KOH, NaOH, l'ammoniaque ou autre base.

Selon un autre mode de réalisation particulier, les monomères employés dans le procédé de l'invention sont notamment l'acide acrylique, l'acide méthacrylique, et/ou leurs sels, et/ou leurs mélanges.

Quelle que soit leur nature exacte, les monomères (m1) de l'étape (E0) peuvent être mis en oeuvre à des concentrations relativement élevées, typiquement à des concentrations qui seraient suffisantes pour assurer la formation d'un gel si l'étape (E0) était conduite en l'absence d'agent de contrôle. Les inventeurs ont maintenant mis en évidence que, de façon surprenante, la polymérisation de l'étape (E) peut, au besoin être conduite dans des conditions qui correspondent à celle de la polymérisation dite en gel, avec des teneurs élevées en monomères, sans nécessairement conduire à une gélification du milieu réactionnel lors de la polymérisation lorsqu'elle est effectuée en présence d'un agent de contrôle. Qu'une gélification du milieu soit observée ou non, l'étape (E) permet surtout, de façon surprenante, de maintenir une polymérisation de type contrôlée malgré la forte concentration en monomères.

Typiquement, la concentration initiale en monomères dans le milieu réactionnel de l'étape (E) peut aller jusqu'à 40% en masse, voire jusqu'à 50% en masse, cette concentration restant en général inférieure à 30% en masse par rapport à la masse totale du milieu réactionnel. Par exemple, la concentration initiale en monomères dans le milieu réactionnel de l'étape (E) est comprise entre 0,5 % et 35%, notamment entre 1 et 20% en masse par rapport à la masse totale du milieu réactionnel.

Selon un mode de réalisation spécifique, les monomères hydrophiles employés dans l'étape (E0) sont des macromonomères thermosensibles, insolubles dans l'eau au-delà d'une certaine température (point de trouble ou "cloud point" en anglais), mais solubles à plus faible température, l'étape (E0) étant conduite au moins partiellement à une température inférieure à la température du point de trouble. Les macromonomères de ce type présentent typiquement une fonction polymérisable de type acrylamido, et une chaîne latérale composée d'enchaînements oxyde d'éthylène ou oxyde de propylène (statistique ou à blocs), ou bien à base de N-isopropylacrylamide, ou de N-vinylcaprolactame.

Lorsque les chaînes polymères sont utilisées à titre d'agent anti-tartre, on peut employer à titre de monomère (m1) selon l'invention tout monomère dont le polymère résultant est connu comme induisant un effet d'inhibition de la formation de dépôts inorganiques et/ou organiques tels que des tartres.

En particulier, selon un mode de réalisation intéressant, les monomères m1 peuvent typiquement être des monomères acide acrylique, qui conduisent à la formation de poly(acide acrylique), bien connu comme inhibiteur de la formation de tartre de sulfate de baryum.

Plus généralement, on peut utiliser à titre de monomères hydrophiles m1 selon l'invention des acides et leurs dérivés (notamment des anhydrides, esters et des dérivés chlorés comme les chlorures d'acides), ces acides et dérivés utiles à titre de monomères m1 selon l'invention étant typiquement choisis parmi :

- l'acide acrylique, l'acide méthacrylique et l'acide éthacrylique ;
- l'acide $\alpha$-chioroacryhque, l'acide crotonique, l'acide maléique, l'anhydride maléique, l'acide itaconique, l'acide citraconique, l'acide mésaconique, l'acide glutaconique, l'acide aconitique, l'acide fumarique ;
- l'acide bromoacrylique, l'acide bromométhylacrylique, l'acide $\alpha$-cyano acrylique, l'acide $\beta$-méthyl acrylique, l'acide $\alpha$-phényiacrylique, l'acide $\beta$-acryloxy propionique, l'acide $\beta$-carboxyethyl acrylique (acide acrylique oligomerisé tel que celui commercialisé sous le nom de Sipomer B-CEA), l'acide sorbique, l'acide $\alpha$-chlorosorbique, l'acide angélique, l'acide cinnamique, l'acide p-chloro cinnamique, l'acide $\beta$-styrylacrylique, l'acide aitaconique, l'acide vinyl benzoique, l'acide propyl acrylique, l'acide acétamido acrylique, l'acide maléimido propyl carboxylique ;
- les monoesters d'acide dicarboxylique monoéthyleniquement insaturé, où l'acide dicarboxylique monoéthyléniquement insaturé comprend de préférence de 1 à 4 atomes de carbone, par exemple de 1, 2 ou 3 ;
- l'acide maléique monométhylé ;
- l'acide vinylsulfonique, l'acide allylsulfonique, l'acrylate de sulfoéthyle, le méthacrylate de sulfoéthyle, l'acrylate de sulfopropyle, le méthacrylate de sulfopropyle, l'acide 2-hydroxy-3-acryloyloxypropylsulfonique, l'acide 2-hydroxy-3-methacryloyloxy propylsulfonique, les acides styrènesulfoniques, l'acide 2-acrylamido-2-méthyl propanesulfonique,

l'acide vinylphosphonique, l'acide isopropénylphosphonique;

- les acides allylphosphosphoniques, l'acide diallylaminométhylenephosphonique ;
- les mélanges de deux ou plusieurs de ces acides ou dérivés d'acide -leurs sels.

Des composés intéressants à titre de monomères m1 sont l'acide acrylique, l'acide méthacrylique, l'acide β-carboxyethyl acrylique acid (acide acrylique oligomerisé, et notamment du type du Sipomer B-CEA précité), l'acide itaconique, l'acide maléique, l'acide glutaconique, l'acide aconitique, l'acide fumarique, l'acide vinylbenzoique, l'acide propyl acrylique, l'acide maleimido propyl carboxylique ; et les mélanges de ces composés.

Lorsque les monomères m1 contiennent des groupes acides, ils peuvent être mis en oeuvre lors de leur polymérisation sous la forme d'acide libre (-COOH par exemple) ou bien sous une forme neutralisée en tout ou partie (groupes carboxylates ou mélange cde carboxylates et de -COOH, par exemple).

A titre de monomères m1 on peut aussi employer (seuls ou éventuellement en mélange avec les composés précités) :

- des esters d'acide mono- ou di-carboxylique α,β-éthyléniquement insaturé et d'alcanediol, comme par exemple l'acrylate de 2-hydroxyéthyle, le méthacrylate de 2-hydroxyéthyle, l'ethacrylate de 2-hydroxyéthyle, 2-hydroxypropyl acrylate, le méthacrylate de 2-hydroxypropyle, l'acrylate de 3-hydroxypropyle, le méthacrylate de 3-hydroxypropyle, l'acrylate de 3-hydroxybutyle, le méthacrylate de 3-hydroxybutyle, et leurs mélanges.
- des N-vinyllactames ou des dérivés de N-vinyllactames, typiquement choisis parmi la N-vinylpyrrolidone, la vinylpipéridone, la vinylcaprolactame, et leurs mélanges ;
- des composés vinylamide à ouverture de chaîne, comme par exemple le vinylformamide, le vinyl-N-méthylformamide, le N-vinylacétamide, le N-vinyl-N-méthylacétamide, le N-vinyl-N-ethylacetamide, le N-vinylpropionamide, le N-vinyl-N-méthylpropionamide, le vinylbutyramide, et leurs mélanges ;
- des esters de mono- ou di- acides carboxylique α,β ethyléniquement unsaturés, avec des amino alcools, choisis notamment parmi les acrylate et méthacrylates de N,N dimethylaminométhyle, de N,N-dimethylaminoéthyle, de N, N-diéthylaminoethyle, de N,N-dimethylaminopropyle, de N, N-diethylaminopropyle et de N, N dimethylaminocyclohexyl, et les mélanges de ces esters ;
- des amides d'acides mono- ou di- acides carboxylique α,β ethyléniquement unsaturés avec des diamines ayant au moins un groupe amine primaire ou secondaire, comme, par exemple, le N-[2-(diméthylamino)éthyl]acrylamide, le N [2-(dimethylamino)éthyl]méthacrylamide, le N-[3-(diméthylamino)propyl]acrylamide, le N-[3-(diméthylamino)propyl] méthacrylamide, le N-[4-(diméthylamino)butyl]acrylamide, le N-[4-(diméthylamino)butyl]méthacrylamide, ou bien encore le N-N-(diéthylamino)éthyl acrylamide, et leurs mélanges, et les ammonium quaternaires alkylés correspondants ;
- des amides ou leurs dérivés, incluant en particulier l'hydroxyl éthyl acrylamide, le diacétone acrylamide, le N-morpholine acrylamide, le chlorure d'acrylamido propyl trimethyl ammonium, le diethyl acrylamide, le N- isopropyl acryalmide, le propyl Acrylamide, et leurs mélanges ;
- des N,N-diallylamines et/ou des N,N-diallyl-alkylamines (où l'alkyle est de prérence un alkyle comprenant de 1 à 4 atomes de carbone) et/ou leurs sels d'addition acide et leurs produits quaternisés, par exemple la N, N-diallyl-N-methylamine et/ou and les composés (notamment chlorures et bromures) de N, N-diallyl-N, N-dimethylammonium ;
- des hétérocycles azotes vinyl- et/ou allyl- substitués, tels que les vinylimidazole et viny1-2-méthylimidazole,
- des composes hétéroaromatiques vinyl- et/ou allyl- substitués, comme par exemple les 2- et 4-vinylpyridine, les 2- et 4-allylpyridine, et leurs sels ;
- les amides d'esters de sulfobetaines tels que ceux décrits, par exemple dans la demande US 2010/0093874.

Des monomères m1 bien adaptés pour application anti-tartre selon l'invention, on peut notamment citer l'acide acrylique, le vinyl sulfonate de sodium, acides styrènesulfoniques et/ou l'acide vinylphosphonique.

Typiquement, la concentration initiale en monomères dans le milieu réactionnel de l'étape (E0) peut aller jusqu'à 40% en masse, voire jusqu'à 50% en masse, cette concentration restant en général inférieure à 35% en masse par rapport à la masse totale du milieu réactionnel. Par exemple, la concentration initiale en monomères dans le milieu réactionnel de l'étape (E0) est comprise entre 5 % et 35%, notamment entre 10et 30% en masse par rapport à la masse totale du milieu réactionnel.

De préférence, dans l'étape (E0), tous les monomères hydrophiles sont dissous et/ou dispersés au sein du milieu aqueux (M).

Les monomères hydrophobes (m2)

Ces monomères, mis en oeuvre dans l'étape (E0) sous la forme d'une solution micellaire, à savoir contenant, à l'état dispersé au sein du milieu (M), des micelles comprenant ces monomères hydrophobes. Sous réserve qu'ils puissent

être intégrés dans des micelles de ce type, tout monomère de nature hydrophobe peut être envisagé dans l'étape (E0).

A titre d'exemple non limitatif de monomère hydrophobe utilisable selon l'invention, on peut notamment citer :

- les monomères vinylaromatiques tels que le styrène, l'alpha methylstyrène, le parachlorométhylstyrène, le vinyltoluène, le 2-methylstyrene, le 4-methylstyrene, le 2-(n-butyl)styrene, ou le 4-(n-decyl)styrene (le styrène s'avère notamment intéressant) ;

- les composés vinyliques halogénés, tels que halogénures de vinyle ou de vinylidène, comme des chlorures ou fluorure de vinyle ou de vinylidene, répondant à la formule $R_bR_cC=CX^1X^2$,
  où :

  $X^1$ = F ou Cl
  $X^2$ = H, F ou Cl
  chacun de $R_b$ et $R_c$ représente, indépendamment :

  - H, Cl, F ; ou
  - un groupe alkyle, de préférence chloré et/ou fluoré, plus avantageusement perchloré ou perfluoré ;

- les esters d'acide mono-, di-carboxylique $\alpha,\beta$ éthyléniquement insaturés avec C2-C30-alcanols, par exemple, l'ethacrylate de methyl, le (meth)acrylate d'ethyl, l'ethacrylate d'ethyl, le (meth)acrylate de n-propyl, le (meth)acrylate d'isopropyl, le (meth)acrylate de n-butyl, le (meth)acrylate de sec-butyl, le (meth)acrylate de tert-butyl, l'ethacrylate de tert-butyl, le (meth)acrylate de n-hexyl, le (meth)acrylate de n-heptyl, le (meth)acrylate de n-octyl, le (meth)acrylate de 1,1,3,3-tetramethylbutyl, le (meth)acrylate d'ethylhexyl, le (meth)acrylate de n-nonyl, le (meth)acrylate de n-decyl, le (meth)acrylate de n-undecyl, le (meth)acrylate de tridecyl, le (meth)acrylate de myristyl, le (meth)acrylate de pentadecyl, le (meth)acrylate de palmityl, le (meth)acrylate de heptadecyl, le (meth)acrylate de nonadecyl, le (meth)acrylate d'arachinyl, le (meth)acrylate de behenyl, le (meth)acrylate de lignoceryl, le (meth)acrylate de cerotinyl, le (meth)acrylate de melissinyl, le (meth)acrylate de palmitoleoyl, le (meth)acrylate d'oleyl, le (meth) acrylate de linolyl, le (meth)acrylate de linolenyl, le (meth)acrylate de stearyl, le (meth)acrylate de lauryl et leurs mélanges ;

- les esters d'alcool de vinyl ou d'allyl avec les acides monocarboxyliques en C1-C30, par exemple, le vinyl acétate, le vinyl propionate, le vinyl butyrate, le vinyl laurate, le vinyl stéarate, le vinyl propionate, le vinyl versatate et leurs mélanges ;

- les esters d'acides mono- et di-carboxyliques $\alpha,\beta$ éthyléniquement insaturés avec l'alcanediols en C4-C30, par exemple, l'acrylate de 3-hydroxybutyl, le méthacrylate de 3-hydroxybutyl, l'acrylate de 4-hydroxybutyl, le méthacrylate de 4-hydroxybutyl, l'acrylate de 6-hydroxyhexyl, le méthacrylate de 6-hydroxyhexyl, l'acrylate 3-hydroxy-2-ethylhexyl et le méthacrylate de 3-hydroxy-2-ethylhexyl ;

- les amides primaires d'acides mono- et di-carboxyliques $\alpha,\beta$ éthyléniquement insaturés et les dérivés de N-alkyl et N,N-dialkyl, tels que le N-propyl(meth)acrylamide, le N-(n-butyl)(meth)acrylamide, le N-(tert-butyl)(meth)acrylamide, le N-(n-octyl)(meth)acrylamide, le N-(1,1,3,3-tetramethylbutyl)(meth)acrylamide, le N-ethylhexyl(meth)acrylamide, le N-(n-nonyl)(meth)acrylamide, le N-(n-decyl)(meth)acrylamide, le N-(n-undecyl)(meth)acrylamide, le N-tridecyl(meth)acrylamide, le N-myristyl(meth)acrylamide, le N-pentadecyl(meth)acrylamide, le N-palmityl(meth)acrylamide, le N-heptadecyl(meth)acrylamide, le N-nonadecyl(meth)acrylamide, le N-arachinyl(meth)acrylamide, le N-behenyl(meth)acrylamide, le N-lignoceryl(meth)acrylamide, le N-cerotinyl(meth)acrylamide, le N-melissinyl(meth) acrylamide, le N-palmitoleoyl(meth)acrylamide, le N-oleyl(meth)acrylamide, le N-linolyl(meth)acrylamide, le N-linolenyl(meth)acrylamide, le N-stearyl(meth)acrylamide et le N-lauryl(meth)acrylamide ;

- les N-vinyllactams et ses dérivées tels que, le N-vinyl-5-ethyl-2-pyrrolidone, le N-vinyl-6-methyl-2-piperidone, le N-vinyl-6-ethyl-2-piperidone, le N-vinyl-7-methyl-2-caprolactam et le N-vinyl-7-ethyl-2-caprolactam ;

- les esters d'acides mono- et di-carboxyliques $\alpha,\beta$ éthyléniquement insaturés avec aminoalcools, par exemple, le (meth)acrylate de N,N-dimethylaminocyclohexyl;

- les amides d'acides mono- et di-carboxyliques $\alpha,\beta$ éthyléniquement insaturés avec diamines comprenant au moins un groupe amino primaire ou secondaire, par exemple, le N-[4-(dimethylamino)butyl]acrylamide, le N-[4-(dimethylamino)butyl]methacrylamide, le N-[2-(diethylamino)ethyl]acrylamide, le N-[4-(dimethylamino)cyclohexyl]acrylamide, le N-[4-(dimethylamino)cyclohexyl]methacrylamide .

Selon un mode de réalisation préférentiel, les monomères hydrophobes employés selon l'invention, peuvent être choisis parmi :

- les esters alpha-bêta insaturés d'alkyle en C1-C30 alkyle, de préférence d'alkyle en C4-C22, en particulier les acrylates et méthacrylate d'alkyle, comme les acrylates et méthacrylate de ethyle, butyle, 2-étylhexyl, isoactyle, lauryle, isodécyle ou stéaryle, oleyl ou behenyl (le méthacrylate de lauryle en particulier s'avère notamment intéressant) ;
- les amides alpha-bêta insaturés d'alkyle en C1-C30 alkyle, de préférence d'alkyle en C4-C22, en particulier les acrylamide et méthacrylamide d'alkyle, comme lethyle, butyle, 2-étylhexyl, isoactyle, lauryle, isodécyle ou stéaryle oleyl ou behenyl acrylamide et methacrylamide (le lauryle methacrylamide en particulier s'avère notamment intéressant) ;
- les esters de vinyle ou d'alcool allylique d'acide carboxyliques saturés tels que les acétate, propionate, versatate, ou stéarate de vinyle ou d'allyle ;
- les mélanges et association de deux ou plusieurs des monomères précités.

Selon un mode particulier, les monomères hydrophobes employés selon l'invention sont des monomères de type auto-micellisables. Entre autres exemples illustratifs possibles, les monomères hydrophobes employés selon l'invention peuvent notamment être choisis parmi :

- le SIPOMER BEM
- un monomère ou un mélange de monomères répondant à la formule suivante :

$$CH2=CH-CH2-N^+(-CH_3)-R \; ; \; X^-$$

où :

$X^-$ est un anion, noatmment un anion chlorure ;

R est un groupe alkyle en C10 à C22, par exemple entre C12 et C18.

De préférence, les micelles de la solution micellaire de l'étape (E0) ne contiennent pas de monomères à caractère hydrophile ou hydrodispersible. Par ailleurs, de préférence, tous les monomères hydrophobes employés dans l'étape (E0) sont renfermés dans des micelles de la solution micellaire.

**Les monomères réticulants chimiques clivables (mR)**

Ce sont typiquement des monomères porteurs de deux groupes éthyléniquement insaturés, séparés par un groupe espaceur incluant au moins un groupement clivable du type précité.

Il peut typiquement s'agir de monomères de formule H2C=C-A-C=CH2, où A désigne une chaîne hydrocarbonée divalente, saturée ou insaturée, linéaire ou ramifiée et éventuellement cyclisée en tout ou partie, par exemple une chaine alkylène ou alkénylène, ladite chaîne incluant un groupe clivable.

Des monomères réticulants adaptés incluent notamment les esters acryliques, les esters méthacryliques, les éthers de diallyl et les éther de divinyl d'alcools porteurs d'au moins deux groupes hydroxy (désignés ci-après par alcools « dihydrique », ce terme n'entendant pas désigner ici uniquement les alcools porteurs d'exactement deux groupes -OH, mais plus largement tout alcool porteur d'au minimum deux groupe OH, les groupes OH de ces alcools pouvant être en tout ou partie éthérifiés ou estérifiés).

Des monomères mR adaptés incluent ainsi par exemple les esters acryliques, les esters méthacryliques, les éthers de diallyle et les éther de divinyle des alcools dihydriques suivant :

- le1,2-éthanediol ; le1,2-propanediol ; le 1,3-propanediol ; le 1,2-butanediol, ; le 1,3-butanediol ; le 2,3-butanediol ; le 1,4-butanediol ; le but-2-ène-1, 4-diol ; le1,2-pentanediol, le 1,5-pentanediol, le diethylène glycol, le triethylène glycol, le tetraéthylene glycol ; le dipropylène glycol ; le tripropylène glycol ; le tetrapropylène glycol, le 3-thiapentane-1, 5-diol ;

- les polyethylène glycols et/ou polypropylène glycols ; et les polytétrahydrofuranes, ces polyols ayant une masse moléculaire de préférence comprise entre 200 to 10 000 ;
- les mélange de deux ou plusieurs de ces alcools.

Par l'expression "polyéthylène glycols et/ou polypropylène glycols", on entend ici le groupe consistant en les homopolymères d'oxyde d'éthylène (polyethylene glycols), les homopolymères d'oxyde de propylène (polypropylene glycols), et les copolymers à base d'oxyde d'éthylène et d'oxyde de propylène, notamment les copolymères séqencés comprenant au moins un bloc de polyoxyde d'éthylene et au moins un bloc de poloxyde de propylène.

Des alcools dihydriques bien adaptés dans les esters et éthers précités le triméthylolpropane, le glycérol, le pentaéthrytol, le 1,2,5-pentane triol, le 1,2,6-hexane triol, le sorbitane , ou bien encore les sucres, tels que, entre autres, le sucrose, le glucose ou le mannose.

Ces alcools dihydriques peuvent avantageusement être employés sous forme d'éthoxylates ou propoxylates, à savoir respectivement après réaction avec de l'oxyde d'éthylène ou de l'oxyde de propylène.

Alternativement, on peut employer des éthers de glycydile, qu'on obtient par réaction des alcohols polyhydriques avec de l'épichlorohydrine.

A titre de monomères mR adaptés, on peut également citer :

- les N-allylamines comprenant au moins deux fonctions amines. Des amines de ce type incluent notamment le 1,3-diaminopropane ou le 1,4-diaminobutane ;
- les amides formés à partir de ces allylamines comprenant au moins deux fonctions amines avec des acides carboxyliques insaturés, tels que l'acide acrylique, l'acide méthacrylique l'acide itaconique ou l'acide maléique.

Des monomères mR bien adaptés selon l'invention, utilisés dans les exemples données ci-après, sont le diéthyleneglycol diAcrylate (dit « DiEGDA ») et le N,N'-méthylènebisacrylamide (dit « MBA »)

Plus généralement, on peut employer à titre de monomères mR les composés acrylamido ou methacrylamido, notamment le N,N'-méthylènebisacrylamide, le N,N'-méthylènebismethacrylamide, le glyoxal bisacrylamide, ou le diacrylamido acide acétique.

L'agent de contrôle de polymérisation radicalaire

L'agent de contrôle mis en oeuvre dans l'étape (E0) ou, le cas échéant, dans l'étape (E0°) du procédé de l'invention est un composé porteur d'un groupe thiocarbonylthio -S(C=S)-. Selon un mode de réalisation particulier, l'agent de contrôle peut être porteur de plusieurs groupes thiocarbonylthio. Il peut éventuellement s'agir d'une chaîne polymère porteuse d'un tel groupe.

Ainsi, cet agent de contrôle peut par exemple répondre à la formule (A) ci-dessous :

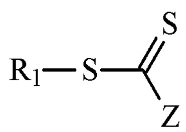

(A)

dans laquelle :

- Z représente :

  . un atome d'hydrogène,
  . un atome de Chlore,
  . un radical alkyl éventuellement substitué, aryl éventuellement substitué,
  . un hétérocycle éventuellement substitué,
  . un radical alkylthio éventuellement substitué,
  . un radical arylthio éventuellement substitué,
  . un radical alkoxy éventuellement substitué,
  . un radical aryloxy éventuellement substitué,
  . un radical amino éventuellement substitué,
  . un radical hydrazine éventuellement substitué,

. un radical alkoxycarbonyl éventuellement substitué,
. un radical aryloxycarbonyl éventuellement substitué,
. un radical carboxy, acyloxy éventuellement substitué,
. un radical aroyloxy éventuellement substitué,
. un radical carbamoyle éventuellement substitué,
. un radical cyano,
. un radical dialkyl- ou diaryl-phosphonato,
. un radical dialkyl-phosphinato ou diaryl-phosphinato, ou
. une chaîne polymère,

et

- $R_1$ représente :

. un groupe alkyle, acyle, aryle, aralkyle, alcène ou alcyne éventuellement substitué,
. un cycle carboné ou un hétérocycle, saturé ou non, aromatique éventuellement substitué, ou
. une chaîne polymère, de préférence hydrophile ou hydrodispersible lorsque l'agent est mis en oeuvre dans l'étape (E0).

Les groupes $R_1$ ou Z, lorsqu'ils sont substitués, peuvent l'être par des groupes phényles éventuellement substitués, des groupes aromatiques éventuellement substitués, des cycles carbonés saturés ou non, des hétérocycles saturé ou non, ou des groupes : alkoxycarbonyle ou aryloxycarbonyle (-COOR), carboxy (-COOH), acyloxy ($-O_2CR$), carbamoyle ($-CONR_2$), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino ($-NR_2$), halogène, perfluoroalkyle $C_nF_{2n+1}$, allyle, époxy, alkoxy (-OR), S-alkyle, S-aryle, des groupes présentant un caractère hydrophile ou ionique tels que les sels alcalins d'acides carboxyliques, les sels alcalins d'acide sulfonique, les chaînes polyoxyde d'alkylène (PEO, POP), les substituants cationiques (sels d'ammonium quaternaires), R représentant un groupe alkyle ou aryle, ou une chaîne polymère.

Pour les agents de contrôle de formule (A) mis en oeuvre dans l'étape (E0), on préfère en général que le groupe R1 soit de nature hydrophile. Avantageusement, il s'agit d'une chaîne polymère hydrosoluble ou hydrodispersible.

Le groupe R1 peut alternativement être amphiphile, à savoir présenter à la fois un caractère hydrophile et lipophile. Il est préférable que R1 ne soit pas hydrophobe.

Concernant les agents de contrôle de formule (A) mis en oeuvre dans l'étape (E0°), $R_1$ peut typiquement être un groupe alkyle substitué ou non, de préférence substitué. Un agent de contrôle de formule (A) mis en oeuvre dans l'étape (E0°) peut néanmoins comprendre d'autres types de groupes $R_1$, notamment un cycle ou une chaîne polymère

Les groupes alkyle, acyle, aryle, aralkyle ou alcyne éventuellement substitués présentent généralement 1 à 20 atomes de carbone, de préférence 1 à 12, et plus préférentiellement 1 à 9 atomes de carbone. Ils peuvent être linéaires ou ramifiés. Ils peuvent être également substitués par des atomes d'oxygène, sous forme notamment d'esters, des atomes de soufre ou d'azote.

Parmi les radicaux alkyle, on peut notamment citer le radical méthyle, éthyle, propyle, butyle, pentyle, isopropyle, tert-butyle, pentyle, hexyle, octyle, decyle ou dodécyle.

Les groupes alcynes sont des radicaux généralement de 2 à 10 atomes de carbone, ils présentent au moins une insaturation acétylénique, tel que le radical acétylenyle.

Le groupe acyle est un radical présentant généralement de 1 à 20 atomes de carbone avec un groupement carbonyle.

Parmi les radicaux aryle, on peut notamment citer le radical phényle, éventuellement substitué notamment par une fonction nitro ou hydroxyle.

Parmi les radicaux aralkyle, on peut notamment citer le radical benzyle ou phénéthyle, éventuellement substitué notamment par une fonction nitro ou hydroxyle.

Lorsque $R_1$ ou Z est une chaîne polymère, cette chaîne polymère peut être issue d'une polymérisation radicalaire ou ionique ou issue d'une polycondensation.

Avantageusement, on utilise comme agent de contrôle pour l'étape (E0), ainsi que pour l'étape (E0°) le cas échéant, des composés porteurs d'une fonction xanthate -S(C=S)O-, trithiocarbonate, des dithiocarbamate, ou dithiocarbazate, par exemple porteurs d'une fonction O-ethyl xanthate de formule $-S(C=S)OCH_2CH_3$ .

Lorsque l'étape (E0°) est conduite, il est notamment intéressant d'employer à titre d'agents de contrôle dans cette étape un composé choisi parmi les xanthates, les trithiocarbonates, les dithiocarbamates, ou les dithiocarbazates. Les xanthates se révèlent tout particulièrement intéressants, notamment ceux porteur d'une fonction O-ethyl xanthate $-S(C=S)OCH_2CH_3$, comme le O-ethyl-S-(1-methoxycarbonyl ethyl) xanthate ($(CH_3CH(CO_2CH_3))S(C=S)OEt$. Un autre agent de contrôle possible dans l'étape (E0°) est le dibenzyltrithiocarbonate de formule $PhCH_2S(C=S)SCH_2Ph$ (où Ph=phényle).

Les pré-polymères vivants obtenus dans l'étape (E0°) en utilisant les agents de contrôle précités s'avèrent particulièrement intéressants pour la conduite de l'étape (E0).

Amorçage et conduite des polymérisations radicalaires des étapes (E0) et (E0°)

Lorsqu'il est mis en oeuvre dans l'étape (E0) l'amorceur de la polymérisation radicalaire est de préférence hydrosoluble ou hydrodispersible. Hormis cette condition préférentielle, on peut employer dans l'étape (E0) et l'étape (E0°) du procédé de l'invention tout amorceur de polymérisation radicalaire (source de radicaux libres) connu en soi et adapté aux conditions choisies pour ces étapes.

Ainsi, l'amorceur (initiateur) de polymérisation radicalaire employé selon l'invention peut par exemple être choisi parmi les initiateurs classiquement utilisés en polymérisation radicalaire. Il peut s'agir par exemple d'un des initiateurs suivants :

- les peroxydes d'hydrogène tels que : l'hydroperoxyde de butyle tertiaire, l'hydroperoxyde de cumène, le t-butyl-peroxyacétate, le t-butyl-peroxybenzoate, le t-butylperoxyoctoate, le t-butylperoxynéodécanoate, le t-butylperoxyisobutarate, le peroxyde de lauroyle, le t-amylperoxypivalte, le t-butylperoxypivalate, le peroxyde de dicumyl, le peroxyde de benzoyle, le persulfate de potassium, le persulfate d'ammonium,

- les composés azoïques tels que : le 2-2'-azobis(isobutyronitrile), le 2,2'-azobis(2-butanenitrile), le 4,4'-azobis(4-acide pentanoïque), le 1,1'-azobis(cyclohexane-carbonitrile), le 2-(t-butylazo)-2-cyanopropane, le 2,2'-azobis[2-méthyl-N-(1,1)-bis(hydroxyméthyl)-2-hydroxyéthyl] propionamide, le 2,2'-azobis(2-méthyl-N-hydroxyéthyl]-propionamide, le dichlorure de 2,2'-azobis(N,N'-diméthylèneisobutyramidine), le dichlorure de 2,2'-azobis (2-amidinopropane), le 2,2'-azobis (N,N'-diméthylèneisobutyramide), le 2,2'-azobis(2-méthyl-N-[1,1-bis (hydroxyméthyl)-2-hydroxyéthyl] propionamide), le 2,2'-azobis(2-méthyl-N-[1,1-bis (hydroxyméthyl)éthyl] propionamide), le 2,2'-azobis[2-méthyl-N-(2-hydroxyéthyl) propionamide], le 2,2'-azobis(isobutyramide) dihydrate,

- les systèmes redox comportant des combinaisons telles que :

  - les mélanges de peroxyde d'hydrogène, d'alkyle, peresters, percarbonates et similaires et de n'importe lequel des sels de fer, de sels titaneux, formaldéhyde sulfoxylate de zinc ou formaldéhyde sulfoxylate de sodium, et des sucres réducteurs,

  - les persulfates, perborate ou perchlorate de métaux alcalins ou d'ammonium en association avec un bisulfite de métal alcalin, tel que le métabisulfite de sodium, et des sucres réducteurs, et

  - les persulfates de métal alcalin en association avec un acide arylphosphinique, tel que l'acide benzène phosphonique et autres similaires, et des sucres réducteurs.

Typiquement, la quantité d'initiateur à utiliser est déterminée de préférence de manière à ce que la quantité de radicaux générés soit d'au plus 50 % en mole, de préférence d'au plus 20% en mole, par rapport à la quantité d'agent de contrôle ou de transfert.

Tout particulièrement dans l'étape (E0), il s'avère généralement intéressant d'utiliser un amorceur radicalaire de type redox, qui présente, entre autres, l'avantage de ne pas nécessiter un chauffage du milieu réactionnel (pas d'amorçage thermique) et dont les inventeurs ont en outre maintenant découvert qu'il se révèle adapté à la polymérisation micellaire de l'étape (E0).

Ainsi, l'amorceur de polymérisation radicalaire employé l'étape (E0) peut typiquement être un amorceur redox, typiquement ne nécessitant pas de chauffage pour leur amorçage thermique. Il s'agit typiquement d'un mélange d'au moins un agent oxydant avec au moins un agent réducteur.

L'agent oxydant présent dans ce système redox est de préférence un agent hydrosoluble. Cet agent oxydant peut par exemple être choisi parmi les peroxydes, tels que : le peroxyde d'hydrogène, l'hydroperoxyde de butyle tertiaire, l'hydroperoxyde de cumène, le t-butyl-peroxyacétate, le t-butyl-peroxybenzoate, le t-butylperoxyoctoate, le t-butylperoxynéodécanoate, le t-butylperoxyisobutarate, le peroxyde de lauroyle, le t-amylperoxypivalte, le t-butylperoxypivalate, le peroxyde de dicumyl, le peroxyde de benzoyle ; le persulfate de sodium, le persulfate de potassium, le persulfate d'ammonium, ou bien encore le bromate de potassium.

L'agent réducteur présent dans le système redox est également, de préférence, un agent hydrosoluble. Cet agent réducteur peut typiquement être choisi parmi le formaldéhyde sulfoxylate de sodium (notamment sous sa forme de dihydrate, connue sous le nom de Rongalit ou sous la forme d'un anhydride), l'acide ascorbique, l'acide érythorbique, les sulfites, bisulfites ou métasulfites (sulfites, bisulfites ou métasulfites de métaux alcalins en particulier), les nitrilotrispropionamides, et les amines et ethanolamines tertiaires (de préférence hydrosolubles).

Des systèmes redox possibles comportent des combinaisons telles que :

- les mélanges de persulfates hydrosolubles avec des amines tertiaires hydrosolubles,
- les mélanges de bromates hydrosolubles (bromate de métaux alcalins par exemple) avec des sulfites hydrosolubles (sulfites de métaux alcalins par exemple),
- les mélanges de peroxyde d'hydrogène, d'alkyle, peresters, percarbonates et similaires et de n'importe lequel des sels de fer, de sels titaneux, formaldéhyde sulfoxylate de zinc ou formaldéhyde sulfoxylate de sodium, et des sucres réducteurs,
- les persulfates, perborate ou perchlorate de métaux alcalins ou d'ammonium en association avec un bisulfite de métal alcalin, tel que le métabisulfite de sodium, et des sucres réducteurs, et
- les persulfates de métal alcalin en association avec un acide arylphosphinique, tel que l'acide benzène phosphonique et autres similaires, et des sucres réducteurs.

Un système redox intéressant comprend (et de préférence consiste en) l'association de persulfate d'ammonium et de formaldéhyde sulfoxylate de sodium.

De façon générale, et en particulier dans le cas de l'utilisation d'un système redox du type persulfate d'ammonium/formaldéhyde sulfoxylate de sodium, il s'avère préférable que le milieu réactionnel de l'étape (E0) soit exempt de cuivre. En cas de présence de cuivre, il est en général souhaitable d'ajouter un complexant du cuivre, tel que de l'EDTA, en une quantité propre à masquer sa présence.

Quelle que soit la nature de l'amorceur employé, la polymérisation radicalaire de l'étape (E0°) peut être effectuées sous toute forme physique appropriée, par exemple en solution dans l'eau ou dans un solvant par exemple un alcool ou le THF, en émulsion dans l'eau (procédé dit "latex"), en masse, le cas échéant en contrôlant la température et/ou le pH afin de rendre des espèces liquides et/ou solubles ou insolubles.

Après mise en oeuvre de l'étape (E0), compte tenu de la mise en oeuvre spécifique d'un agent de contrôle, on obtient des polymères fonctionnalisés par des groupes de transfert (polymères vivants). Ce caractère vivant permet si on le souhaite, d'employer ces polymères dans une réaction de polymérisation ultérieure, selon une technique bien connue en soi. Alternativement, au besoin, il est possible de désactiver ou de détruire les groupes de transfert, par exemple par hydrolyse, ozonolyse, ou réaction avec des amines, selon des moyens connus en soi. Ainsi, selon un mode de réalisation particulier, le procédé de l'invention peut comprendre, après l'étape (E0), une étape (E1) d'hydrolyse, d'ozonolyse ou de réaction avec des amines, propre à désactiver et/ou détruire tout ou partie des groupes de transfert présents sur le polymère préparé dans l'étape (E0).

**Tensioactifs**

Pour réaliser la solution micellaire des monomères hydrophobes employés dans l'étape (E0), on peut employer tout tensioactif adapté, à titre non limitatif, on peut par exemple, employer les tensioactifs choisis dans la liste suivante :

- Les <u>tensioactifs anioniques</u> peuvent être choisis parmi:

  les alkylesters sulfonates, par exemple de formule R-CH($SO_3$M)-$CH_2$COOR', ou les alkylesters sulfates, par exemple de formule R-CH($OSO_3$M)-$CH_2$COOR', où R représente un radical alkyle en $C_8$-$C_{20}$, de préférence en $C_{10}$-$C_{16}$, R' un radical alkyle en $C_1$-$C_6$, de préférence en $C_1$-$C_3$ et M un cation alcalino-terreux, par exemple sodium, ou le cation ammonium. On peut citer tout particulièrement les méthyl ester sulfonates dont le radical R est en $C_{14}$-$C_{16}$;

  les alkylbenzènesulfonates, plus particulièrement en $C_9$-$C_{20}$, les alkylsulfonates primaires ou secondaires, notamment en $C_8$-$C_{22}$, les alkylglycérol sulfonates ;

  les alkylsulfates par exemple de formule $ROSO_3M$, où R représente un radical alkyle ou hydroxyalkyle en $C_{10}$-$C_{24}$, de préférence en $C_{12}$-$C_{20}$ ; M un cation de même définition que ci-dessus ;

  les alkyléthersulfates par exemple de formule $RO(OA)_nSO_3M$ où R représente un radical alkyle ou hydroxyalkyle en $C_{10}$-$C_{24}$, de préférence en $C_{12}$-$C_{20}$ ; OA représentant un groupement éthoxylé et/ou propoxylé ; M représentant un cation de même définition que ci-dessus, n variant généralement de 1 à 4, comme par exemple le lauryléthersulfate avec n = 2 ;

  les alkylamides sulfates, par exemple de formule $RCONHR'OSO_3M$ où R représente un radical alkyle en $C_2$-$C_{22}$,

de préférence en $C_6$-$C_{20}$, R' un radical alkyle en $C_2$-$C_3$, M représentant un cation de même définition que ci-dessus, ainsi que leurs dérivés polyalcoxylés (éthoxylés et/ou propoxylés) (alkylamidoether sulfates ;
les sels d'acides gras saturés ou insaturés, par exemple comme ceux en $C_8$-$C_{24}$, de préférence en $C_{14}$-$C_{20}$ et d'un cation alcalino-terreux, les N-acyl N-alkyltaurates, les alkyliséthionates, les alkylsuccinamates et alkylsulfo succinates, les alkyl glutamates, les monoesters ou diesters de sulfosuccinates, les N-acyl sarcosinates, les polyéthoxycarboxylates ;
les mono et di esters phosphates, par exemple de formule suivante : $(RO)_x$-P(=O)$(OM)_x$ ou R représente un radical alkyle, alkylaryle, arylalkyle, aryle, éventuellement polyalcoxylés, x et x' étant égaux à 1 ou 2, à la condition que la somme de x et x' soit égale à 3, M représentant un cation alcalino-terreux ;

- Les tensioactifs non ioniques peuvent être choisis parmi:

les alcools gras alcoxylés ; par exemple les laureth-2, laureth-4, laureth-7, oleth-20, les triglycérides alcoxylés, les acides gras alcoxylés, les esters de sorbitan alcoxylés, les amines grasses alcoxylées, les di(phényl-1 éthyl) phénols alcoxylés, les tri(phényl-1 éthyl) phénols alcoxylés, les alkyls phénols alcoxylés, les produits résultant de la condensation de l'oxyde d'éthylène avec un composé hydrophobe résultant de la condensation de l'oxyde de propylène avec le propylène glycol, tels les Pluronic commercialisés par BASF ; les produits résultant de la condensation de l'oxyde d'éthylène le composé résultant de la condensation de l'oxyde de propylène avec l'éthylènediamine, tels les Tetronic commercialisés par BASF ; les alkylpolyglycosides comme ceux décrits dans US 4565647 ou les alkylglucosides;
les amides d'acides gras par exemple en $C_8$-$C_{20}$, notamment les monoalkanolamides d'acides gras, par exemple la cocamide MEA ou la cocamide MIPA ;

- Les tensioactifs amphotères (amphotères vrais comprenant un groupe ioniques et un groupe potentiellement ionique de charge opposée, ou zwitterioniques comprenant simultanément deux charges opposées) peuvent être:

les bétaïnes de manière générale, notamment carboxybétaïnes de par exemple la lauryl bétaïne (Mirataine BB de la société Rhodia) ou l'octylbétaïne ou la cocobétaïne (Mirataine BB-FLA de Rhodia); les amidoalkylbétaïnes, comme la cocamidopropyl bétaïne (CAPB) (Mirataine BDJ de la société Rhodia ou Mirataine BET C-30 de Rhodia), le Mackam CET (Rhodia) ;
les sulfo-bétaïnes ou sultaines comme la cocamidopropyl hydroxy sultaïne (Mirataine CBS de la société Rhodia) ;
les alkylamphoacétates et alkylamphodiacétates, comme par exemple comprenant une chaîne coco, lauryle (Miranol C2M Conc NP, C32, L32 notamment, de la société Rhodia) ;
les alkylamphopropionates ou les alkylamphodipropionates, (Miranol C2M SF) ;
les alkyl amphohydroxypropyl sultaïnes (Miranol CS),
les oxide d'alkyl amines, par exemple lauramine oxide (INCI) ;

- Les tensioactifs cationiques peuvent être les sels d'amines grasses primaires, secondaires ou tertiaires, éventuellement polyethoxylées, les sels d'ammonium quaternaires tels que les chlorures ou les bromures de tetraalkylammonium, d'alkylamidoalkylammonium, de trialkylbenzylammonium, de trialkylhydroxyalkylammonium, ou d'alkylpyridinium, les dérivés d'imidazoline, les oxydes d'amines à caractère cationique. Un exemple de tensioactif cationique est le cetrimonium chloride ou bromide (INCI) ;

Les tensioactifs employés selon la présente invention peuvent être des copolymères à blocs contenant au moins un bloc hydrophile et au moins un bloc hydrophobe distinct du bloc hydrophile, avantageusement obtenus selon un procédé de polymérisation où :

($a_0$) on met en présence au sein d'une phase aqueuse au moins un monomère hydrophile (respectivement hydrophobe), au moins une source de radicaux libres et au moins un agent de contrôle de polymérisation radicalaire du type -S(C=S)- ;
($a_1$) on met en contact le polymère obtenu à l'issu de l'étape ($a_0$) avec au moins un monomère hydrophobe (respectivement hydrophile) distinct du monomère employé dans l'étape ($a_0$) et au moins une source de radicaux libres; ce par quoi on obtient un copolymère dibloc.

Des polymères du type tribloc, ou comprenant davantage des blocs, peuvent éventuellement être obtenus en mettant en oeuvre après l'étape ($a_1$), une étape ($a_2$) dans laquelle, on met en contact le polymère obtenu à l'issu de l'étape (a1) avec au moins un monomère distinct du monomère employé dans l'étape ($a_1$) et au moins une source de radicaux libres ; et plus généralement, en mettant en oeuvre (n+1) étapes du type des étapes ($a_1$) et ($a_2$) précitées et n est un

nombre entier allant typiquement de 1 à 3, où dans chaque étape ($a_n$), avec n≥1 : on met en contact le polymère obtenu à l'issu de l'étape ($a_{n-1}$) avec au moins un monomère distinct du monomère employé dans l'étape ($a_{n-1}$) et au moins une source de radicaux libres. On peut par exemple employer selon l'invention des copolymères du type décrits dans WO03068827, WO03068848 et WO2005/021612.

Selon un mode particulier, les monomères hydrophobes présents au sein de micelles de tensioactifs employés en polymérisation micellaire peuvent être des monomères qui, en eux-mêmes ont la propriété de former des micelles sans avoir besoin d'ajouter des tensioactifs additionnels (monomères dits «auto-micellisables» dans la suite de la description). Selon ce mode particulier, le tensioactif employé peut être le monomère hydrophobe auto-micellisable lui-même, employé sans autre tensioactif, bien que la présence d'un tel tensioactif additionnel ne soit pas exclue. Ainsi, au sens de la présente description, lorsqu'il est fait mention de monomères hydrophobes au sein de micelles de tensioactifs, cette notion englobe aussi bien (i) des monomères hydrophobes présent au sein de micelles de tensioactif autre que ces monomères que (ii) des monomères comprenant au moins une partie ou un bloc hydrophobe et formant par eux-mêmes les micelles en milieu aqueux. Les deux modes (i) et (ii) précités sont compatibles et peuvent coexister (monomères hydrophobes au sein de micelles formées par un autre monomère auto-micellisables par exemple, ou bien encore micelles comprenant une association de tensioactifs et de monomères auto-micellisables).

Différents aspects et avantages de l'invention seront encore illustrés par les exemples ci-après dans lesquels des polymères ont été préparés selon le procédé de l'invention.

## EXEMPLES

Exemple 1 :

Le polymère P1 (poly AA/M BA/LMA/Xa) contenant 0,4% mol de Lauryl Méthacrylate (LMA) et 10%mol de N,N methylene bisacrylamide (MBA) , a été préparé dans les conditions suivantes :
Dans un flacon en PEHD de 200ml on a introduit, à température ambiante (20°C), 49,60g de Stepanol WA Extra ; 2,54g de LMA et 19,25g d'eau déminéralisée. On a laissé agiter à l'aide d'un barreau aimanté pendant 30 min jusqu'à ce que la solution soit limpide.

(Solution A)

Dans un bécher de 2000mL, on a pesé 7,554g de Rhodixan A1, 131,24g d'ethanol et 33,61g de MBA. On ajoute ensuite 157,11g d'acide acrylique (AA), et 526,33g d'eau déminéralisée. Après agitation la solution est homogène et limpide. (Solution B)

On ajoute la Solution A dans la Solution B. Après 15 min d'agitation la solution reste trouble.

On charge cette nouvelle solution dans un Dewar (3000 ml) équipé d'un couvercle qui permet une étanchéité d'atmosphère, une ancre d'agitation, une sonde de température et une arrivée d'azote, à température ambiante (20°C).

Le mélange a été dégazé par bullage d'azote pendant 60 minutes. On a ajouté au milieu, en une fois, 0.75g du formaldéhyde sulfoxylate de sodium, sous forme de solution aqueuse à 10% en masse et 0.75g de persulfate de sodium (solution aqueuse à 10% en masse). Le mélange a été préalablement dégazé par bullage d'azote pendant 15 minutes. On a alors laissé la réaction de polymérisation se dérouler sous agitation pendant 16 heures.

En fin de synthèse, on récupère le produit sous forme d'un gel qui sera ultérieurement mis en forme (extrusion/séchage/broyage) afin d'obtenir en final un matériau granulaire manipulable.

Exemple 2 :

Le polymère P2 (poly AA/MBA/LMA/Xa) contenant 0,8% mol de Lauryl Méthacrylate (LMA) et 10%mol de N,N methylene bisacrylamide (MBA) , a été préparé dans les conditions suivantes :
Dans un flacon en PEHD de 200ml on a introduit, à température ambiante (20°C), 97,81g de Stepanol WA Extra ; 5,00g de LMA et 37,88g d'eau déminéralisée. On a laissé agiter à l'aide d'un barreau aimanté pendant 30 min jusqu'à ce que la solution soit limpide.

(Solution A)

Dans un bécher de 2000mL, on a pesé 7,45g de Rhodixan A1, 104,04g d'ethanol et 33,22g de MBA. On ajoute ensuite 154,98g d'acide acrylique (AA), et 417,54g d'eau déminéralisée. Après agitation la solution est homogène et limpide. (Solution B)

On ajoute la Solution A dans la Solution B. Après 15 min d'agitation la solution reste trouble.

On charge cette nouvelle solution dans un Dewar (3000 ml) équipé d'un couvercle qui permet une étanchéité

d'atmosphère, une ancre d'agitation, une sonde de température et une arrivée d'azote, à température ambiante (20°C).

Le mélange a été dégazé par bullage d'azote pendant 60 minutes. On a ajouté au milieu, en une fois, 0,75g du formaldéhyde sulfoxylate de sodium, sous forme de solution aqueuse à 10% en masse et 0.75g de persulfate de sodium (solution aqueuse à 10% en masse). Le mélange a été préalablement dégazé par bullage d'azote pendant 15 minutes. On a alors laissé la réaction de polymérisation se dérouler sous agitation pendant 16 heures.

En fin de synthèse, on récupère le produit sous forme d'un gel qui sera ultérieurement mis en forme (extrusion/séchage/broyage) afin d'obtenir en final un matériau granulaire manipulable.

Exemple 3 (Contre-exemple) :

Le polymère P3 (poly AA/MBA /Xa) contenant 10%mol de N,N methylene bisacrylamide (MBA) , a été préparé dans les conditions suivantes :
Dans un bécher de 2000mL, on a pesé 9,09g de Rhodixan A1, 191,10g d'ethanol, 189,13g d'acide acrylique (AA) et 40.45g de MBA. Après agitation le MBA n'est pas dissout.

On a ajouté 768,21g d'eau déminéralisée, après agitation la solution devient limpide. On mesure le pH de la solution à l'aide d'une sonde pH, le pH mesuré est de 2.1.

On charge la solution dans un Dewar (3000 ml) équipé d'un couvercle qui permet une étanchéité d'atmosphère, une ancre d'agitation, une sonde de température et une arrivée d'azote, à température ambiante (20°C).

Le mélange a été dégazé par bullage d'azote pendant 60 minutes. On a ajouté au milieu, en une fois, 1,80g du formaldéhyde sulfoxylate de sodium, sous forme de solution aqueuse à 5% en masse et 2.25g de persulfate de sodium (solution aqueuse à 4% en masse). Le mélange a été préalablement dégazé par bullage d'azote pendant 15 minutes. On a alors laissé la réaction de polymérisation se dérouler sous agitation pendant 16 heures.

En fin de synthèse, on récupère le produit sous forme d'un gel qui sera ultérieurement mis en forme (extrusion/séchage/broyage) afin d'obtenir en final un matériau granulaire manipulable.

Exemple 4 (Contre-exemple) :

Le polymère P4 (poly AA/MBA /Xa) contenant 15%mol de N,N methylene bisacrylamide (MBA) , a été préparé dans les conditions suivantes :
Dans un bécher de 2000mL, on a pesé 8,41g de Rhodixan A1, 191,52g d'ethanol, 170,70g d'acide acrylique (AA) et 56,11g de MBA. Après agitation le MBA n'est pas dissout.

On a ajouté 767,55g d'eau déminéralisée, après agitation la solution devient limpide. On mesure le pH de la solution à l'aide d'une sonde pH, le pH mesuré est de 2,2.

On charge la solution dans un Dewar (3000 ml) équipé d'un couvercle qui permet une étanchéité d'atmosphère, une ancre d'agitation, une sonde de température et une arrivée d'azote, à température ambiante (20°C).

Le mélange a été dégazé par bullage d'azote pendant 60 minutes. On a ajouté au milieu, en une fois, 0,90g du formaldéhyde sulfoxylate de sodium, sous forme de solution aqueuse à 10% en masse et 0,90g de persulfate de sodium (solution aqueuse à 10% en masse). Le mélange a été préalablement dégazé par bullage d'azote pendant 15 minutes.

On a alors laissé la réaction de polymérisation se dérouler sous agitation pendant 16 heures.

En fin de synthèse, on récupère le produit sous forme d'un gel qui sera ultérieurement mis en forme (extrusion/séchage/broyage) afin d'obtenir en final un matériau granulaire manipulable.

**Exemple 5 : mise en forme par extrusion puis séchage des gels issus des synthèses P1 et P2**

Les gels P1 et P2 issus des synthèses décrites dans les exemples 1 et 2 et contenant environ 75% d'eau sont alors extrudés puis séchés à 105°C sur un lit fluide.

L'extrudeuse de laboratoire consiste en un hachoir Pro power BOSH muni de grilles de diamètres variables : les grilles ayant des perforations de 3 mm et 8 mm ont été utilisées. Les produits après extrusion sont alors séchés sur un lit fluide de laboratoire (RETSCH) à 105°C pendant 20 minutes. On obtient directement une poudre non collante dont la distribution granulométrique a été déterminée au moyen de tamis (mailles de 2 mm à 0.4 mm).

Les tableaux ci-dessus présentent les distributions granulométriques des poudres obtenues à partir de P1 et P2.

| | % massique | |
|---|---|---|
| | 3 mm | |
| Fraction (mm) | P1 | P2 |
| x < 0,400 | 17,5 | 23,0 |

| | % massique | |
|---|---|---|
| | 8 mm | 3 mm |
| Fraction (mm) | P2 | |
| x < 0,500 | 8,0 | 22,8 |

(suite)

| | % massique | | | | % massique | |
|---|---|---|---|---|---|---|
| | 3 mm | | | | 8 mm | 3 mm |
| Fraction (mm) | P1 | P2 | | Fraction (mm) | P2 | |
| 0,400< x < 0,500 | 6,7 | 7,2 | | 0,500< x < 0,710 | 5,8 | 7,2 |
| 0,500< x < 0,630 | 10,1 | 11,2 | | 0,710< x < 1,000 | 10,6 | 11,1 |
| 0,630< x < 0,710 | 7,5 | 8,1 | | 1,000< x < 1,400 | 14,0 | 8,0 |
| 0,710< x < 0,800 | 6,1 | 7,0 | | 1,400< x < 2,000 | 20,9 | 6,9 |
| 0,800< x < 1,000 | 10,1 | 8,4 | | x > 2,000 | 40,6 | 43,9 |
| 1,000< x < 1,400 | 18,4 | 15,3 | | | | |
| 1,400< x < 2,000 | 18,0 | 15,1 | | | | |
| x > 2,000 | 5,6 | 4,7 | | | | |

**Exemple 6 : <u>évaluation de la capacité de relargage des matériaux en milieu Eau de Mer et en température (85°C)</u>**

Cet exemple illustre la capacité des matériaux polymériques synthétisés précédemment à relarguer des unités polymériques inhibitrices de tartre lorsqu'ils sont soumis à une augmentation de température en milieu aqueux salé, ici l'eau de Mer. En fonction de la sensibilité aux conditions de relargage des agents de réticulation présents dans le matériau, le profil et la durée de relargage seront pour une température donnée, différents.

Les matériaux polymériques issus des exemples 1 à 4 sont séchés à 105°C pendant 2 heures puis légèrement broyés manuellement (taille des grains comprise entre 0.5 mm et quelques mm). Pour chacun des produits issus des exemples 1 à 4, environ 0.5-0.6 g de produit séché est introduit dans un flacon de 60 ml en verre contenant 50 g d'une eau salée (eau de Mer) dont la composition est décrite ci-dessous.

Eau de Mer

| Ion | mg/L | | sel | Sel (g/L) |
|---|---|---|---|---|
| $Na^+$ | 31275 | | NaCl | 79,50 |
| $Ca^{2+}$ | 2000 | | $CaCl_2,2H_2O$ | 7,34 |
| $Mg^{2+}$ | 739 | | $MgCl_2,6H_2O$ | 6,18 |
| $K^+$ | 654 | | KCl | 1,25 |
| $Ba^{2+}$ | 269 | | $BaCl_2,2H_2O$ | 0,48 |
| $Sr^{2+}$ | 87,6 | | $SrCl_2,6H_2O$ | 2,35 |

Après fermeture des flacons, ceux-ci sont placés dans des étuves à 85°C.

Le pH des solutions est alors compris entre 3 et 6.

A intervalle de temps régulier (quelques jours), l'eau des flacons est renouvelée à chaud (à température de conditionnement). La fraction d'eau remplacée est conservée afin d'être analysée en taux de Carbone Organique Total sur un TOC meter (TOC-L) de Shimadzu, adapté aux milieux salés. La mesure de Carbone Organique Total permet de remonter aux taux de polymères relargués . Un facteur multiplicatif de 2 (correspondant au 50% de carbone présent dans un acide polyacrylique) a été appliqué au taux de carbone organique mesuré afin d'exprimer les résultats en pourcentage de polymère relargué.

Les tableaux ci-dessous regroupent les taux de carbone et taux de polymères en cumulatifs mesurés sur les 4 produits issus des exemples 1 à 4, mis en contact avec de l'eau de Mer à 85°C.

| P3 exemple 3- 85°C | | | | P4 exemple 4 - 85°C | | |
|---|---|---|---|---|---|---|
| jours | TOC cumulé | % polymère relargué | | jours | TOC cumulé | % polymère relargué |
| 4 | 1230 | 24.6 | | 4 | 824 | 16.5 |

(suite)

| P3 exemple 3- 85°C | | | | P4 exemple 4 - 85°C | | |
|---|---|---|---|---|---|---|
| jours | TOC cumulé | % polymère relargué | | jours | TOC cumulé | % polymère relargué |
| 7 | 1807 | 36.1 | | 7 | 1096 | 21.9 |
| 11 | 2612 | 52.2 | | 11 | 1705 | 34.1 |
| 14 | 2861 | 100 | | 14 | 2533 | 50.6 |
| | | | | 20 | 3182 | 79 |
| | | | | 25 | 4905 | 98 |

| P1 exemple 1-85°C | | | | P2 exemple 2 - 85°C | | |
|---|---|---|---|---|---|---|
| jours | TOC cumulé | % polymère relargué | | jours | TOC cumulé | % polymère relargué |
| 4 | 650 | 13 | | 4 | 478 | 9.6 |
| 7 | 963 | 19.3 | | 7 | 706 | 14.1 |
| 11 | 1687 | 33.7 | | 11 | 1069 | 21.4 |
| 14 | 2299 | 46 | | 14 | 1432 | 28.6 |
| 18 | 2795 | 56 | | 18 | 1566 | 31.3 |
| 25 | 3992 | 80 | | 21 | 2175 | 43.5 |
| 30 | 4741 | 95 | | 29 | 2835 | 56.7 |
| | | | | 37 | 4000 | 80 |
| | | | | 49 | 4700 | 94 |

**Exemple 7 : évaluation de la capacité de relargage des matériaux en milieu fortement salin et en température (60°C et 85°C)**

Cet exemple illustre la capacité des matériaux polymériques synthétisés précédemment à relarguer des unités polymériques inhibitrices de tartre lorsqu'ils sont soumis à une augmentation de température en milieu aqueux salé. En fonction de la sensibilité aux conditions de relargage des agents de réticulation présents dans le matériau, le profil et la durée de relargage seront pour une température donnée, différents.

Les matériaux polymériques issus des exemples 1 à 4 sont séchés à 105°C pendant 2 heures puis légèrement broyés manuellement (taille des grains comprise entre 0.5 mm et quelques mm). Pour chacun des produits issus des exemples 1 à 4, environ 0.5-0.6 g de produit séché est introduit dans un flacon de 60 ml en verre contenant 50 g d'une eau salée (eau de formation Forties) dont la composition est décrite ci-dessous.

Eau de FORTIES

| Ion | mg/L | | sel | Sel (g/L) |
|---|---|---|---|---|
| $Na^+$ | 31275 | | NaCl | 79,50 |
| $Ca^{2+}$ | 2000 | | $CaCl_2$,$2H_2O$ | 7,34 |
| $Mg^{2+}$ | 739 | | $MgCl_2$,$6H_2O$ | 6,18 |
| $K^+$ | 654 | | KCl | 1,25 |
| $Ba^{2+}$ | 269 | | $BaCl_2$,$2H_2O$ | 0,48 |
| $Sr^{2+}$ | 87,6 | | $SrCl_2$,$6H_2O$ | 2,35 |

Après fermeture des flacons, ceux-ci sont placés dans des étuves, l'une à 60°C et l'autre à 85°C. Le pH des solutions est compris entre 3 et 6.

A intervalle de temps régulier, quelques jours dans les 2 premiers mois jusqu'à quelques semaines à partir du troisième mois, l'eau des flacons est renouvelée à chaud (à température de conditionnement). La fraction d'eau

remplacée est conservée afin d'être analysée en taux de Carbone Organique Total sur un TOC meter (TOC-L) de Shimadzu, adapté aux milieux salés. La mesure de Carbone Organique Total permet de remonter aux taux de polymères relargués . Un facteur multiplicatif de 2 (correspondant au 50% de carbone présent dans un acide polyacrylique) a été appliqué au taux de carbone organique mesuré afin d'exprimer les résultats en pourcentage de polymère relargué.

Les tableaux ci-après regroupent les taux de carbone et taux de polymères en cumulatifs mesurés sur les 4 produits issus des exemples 1 à 4, à 60°C et à 85°C.

| P3 exemple 3- 85°C | | | | P4 exemple 4 - 85°C | | |
|---|---|---|---|---|---|---|
| jours | TOC cumulé | % polymère relargué | | jours | TOC cumulé | % polymère relargué |
| 2 | 799 | 12,1 | | 2,0 | 705 | 11,8 |
| 8 | 1420 | 21,5 | | 8,0 | 1031 | 17,2 |
| 15 | 2934 | 44,5 | | 15,0 | 1840 | 30,7 |
| 17 | 3714 | 56,3 | | 17,0 | 2207 | 36,8 |
| 22 | 4603 | 69,7 | | 22,0 | 2771 | 46,2 |
| 27 | 5445 | 82,5 | | 27,0 | 3346 | 55,8 |
| 31 | 6222 | 94,3 | | 31,0 | 4266 | 71,1 |
| 35 | 6419 | 97,3 | | 35,0 | 4956 | 82,6 |
| 41 | 6514 | 98,7 | | 41,0 | 5658 | 94,3 |
| 48 | 6520 | 98,8 | | 48,0 | 5886 | 98,1 |
| 55 | 6520 | 98,8 | | 55,0 | 5918 | 98,6 |
| | | | | 63,0 | 5926 | 98,8 |

| P1 exemple 1-85°C | | | | P2 exemple 2 - 85°C | | |
|---|---|---|---|---|---|---|
| jours | TOC cumulé | % polymère relarqué | | jours | TOC cumulé | % polymère relarqué |
| 4 | 667 | 13,3 | | 2 | 387 | 7,7 |
| 7 | 859 | 17,2 | | 8 | 709 | 14,2 |
| 11 | 1414 | 28,3 | | 15 | 1329 | 26,6 |
| 14 | 1887 | 37,7 | | 17 | 1418 | 28,4 |
| 18 | 2369 | 47,4 | | 22 | 1598 | 32,0 |
| 21 | 2774 | 55,5 | | 27 | 1754 | 35,1 |
| 29 | 3469 | 69,4 | | 31 | 1853 | 37,1 |
| 36 | 3682 | 73,6 | | 35 | 1980 | 39,7 |
| 47 | 3821 | 76,4 | | 41 | 2131 | 42,7 |
| 78 | 3936 | 78,7 | | 48 | 2219 | 44,5 |
| 99 | 3988 | 79,8 | | 55 | 2280 | 45,7 |
| 131 | 4052 | 81,0 | | 63 | 2323 | 46,6 |
| 187 | 4104 | 82,1 | | 69 | 2352 | 47,1 |
| | | | | 76 | 2388 | 47,9 |
| | | | | 83 | 2415 | 48,4 |
| | | | | 90 | 2442 | 48,9 |
| | | | | 97 | 2466 | 49,4 |
| | | | | 108 | 2503 | 50,2 |
| | | | | 115 | 2528 | 50,7 |

(suite)

| P1 exemple 1-85°C | | | | P2 exemple 2 - 85°C | | |
|---|---|---|---|---|---|---|
| jours | TOC cumulé | % polymère relarqué | | jours | TOC cumulé | % polymère relarqué |
| | | | | 128 | 2568 | 51,5 |
| | | | | 161 | 2670 | 53,5 |
| | | | | 183 | 2728 | 54,7 |
| | | | | 213 | 2792 | 56,0 |
| | | | | 267 | 2909 | 58,3 |

| P3 exemple 3- 60°C | | | | P4 exemple 4-60°C | | | | P2 exemple 2 - 60°C | | |
|---|---|---|---|---|---|---|---|---|---|---|
| jours | TOC cumulé | % polymère relargué | | jours | TOC cumulé | % polymère relargué | | jours | TOC cumulé | % polymère relargué |
| 4 | 210 | 4,2 | | | 452 | 9,0 | | 4 | 529 | 10,58 |
| 6 | 242 | 4,8 | | 6 | 483 | 9,7 | | 6 | 571 | 11,42 |
| 11 | 277 | 5,5 | | 11 | 520 | 10,4 | | 11 | 617 | 12,34 |
| 13 | 292 | 5,8 | | 13 | 532 | 10,6 | | 13 | 632 | 12,64 |
| 18 | 322 | 6,4 | | 18 | 561 | 11,2 | | 18 | 670 | 13,4 |
| 21 | 363 | 7,3 | | 21 | 575,5 | 11,5 | | 21 | 689 | 13,78 |
| 25 | 383 | 7,7 | | 25 | 593 | 11,9 | | 25 | 711 | 14,22 |
| 28 | 408 | 8,2 | | 28 | 606 | 12,1 | | 28 | 733 | 14,66 |
| 32 | 427 | 8,5 | | 32 | 622 | 12,4 | | 32 | 757 | 15,14 |
| 39 | 455 | 9,1 | | 39 | 645 | 12,9 | | 39 | 790 | 15,8 |
| 83 | 567 | 11,3 | | 83 | 749 | 15,0 | | 83 | 954 | 19,08 |
| 125 | 764 | 15,3 | | 125 | 852 | 17,0 | | 125 | 1060 | 21,2 |

**Exemple 8** : **évaluation en condition statique des performances anti-Calcaire des espèces polymérigues relarguées** :

La procédure d'évaluation des performances anti-tartre est dérivée du standard NACE TM0374-2016 ("Laboratory Screening Tests to Détermine the Ability of Scale Inhibitors to Prevent the Précipitation of Calcium Sulfate and Calcium Carbonate from Solution (for Oil and Gas Production Systems)").

Cette procédure, appelée « Jar test » ou « Bottle Test », permet de mesurer les performances inhibitrices de CaCO3 en conditions statiques. Elle consiste à mesurer le taux de Calcium précipitant après mélange dans un flacon de deux eaux incompatibles, puis évolution du mélange sans agitation pendant un temps donné, et mesure de la concentration en Calcium par une méthode volumétrique ou une méthode spectroscopique (ICP-AES) des cations solubles. Les expérimentations comprennent un essai témoin sans inhibiteur et des tests en présence d'inhibiteurs.

Cette évaluation est effectuée à 71°C après mélange de deux saumures dont l'une contient des cations dont le calcium et l'autre des anions dont le carbonate. Ces saumures sont préalablement saturées en dioxyde de carbone. L'inhibiteur est placé dans l'eau des anions. La concentration en inhibiteur varie en général entre 1 à 2 ppm et 10 ppm.

Dans cet exemple, l'inhibiteur provenant des fractions d'eau recueillies à intervalle régulier on introduit un volume de la fraction d'eau contenant le polymère relargué (cf. prélèvement faits dans l'exemple 5) tel que le taux final de polymère anti-tartre dans l'essai soit compris entre 4 ppm et 10 ppm en actif.

Les compositions des saumures sont les suivantes :

Eau des cations

| Salt | Salt (g/L) |
|---|---|
| NaCl | 33.00 |

(suite)

| Salt | Salt (g/L) |
|---|---|
| $CaCl_2,2H_2O$ | 12.15 |
| $MgCl_2,6H_2O$ | 3.68 |

Eau des anions

| Salt | Salt (g/L) |
|---|---|
| NaCl | 33.00 |
| NaHCO3 | 7.36 |

Les eaux sont ensuite saturées en CO2 par bullage à travers l'embout fritté pendant 1h environ sous un débit de CO2.

50 ml de chacune de ces eaux sont conditionnés dans des flacons de polyéthylène. Après avoir équilibré la température des saumures à 71°C dans une étuve, on verse le contenu du flacon « eau des anions » dans le flacon contenant les cations. On agite manuellement puis le mélange est remis à l'étuve à 71°C pendant 24h.

Pour chaque série d'essais, deux essais de contrôle sont réalisés :

blanc min : il s'agit d'un essai sans inhibiteur, la teneur en ion calcium sera minimum (précipitation maximum du CaCO3).

blanc Max : il s'agit d'un essai sans carbonate et sans inhibiteur, l'eau des anions est remplacée par de l'eau épurée, la teneur en ion calcium sera maximum, car il n'y a pas de précipitation.

Après 24 heures de test, les flacons sont sortis de l'étuve, et laissaient à refroidir. Puis un prélèvement de 1 ml est effectué, puis dilué dans 20 ml d'eau pemutée. On effectue un dosage de Calcium sur ces prélèvements et on en déduit l'efficacité d'inhibition exprimée selon la formule ci-dessous.

$$\% \text{ efficacité} = \frac{[Ca^{2+}] - [Ca^{2+}]_{min}}{[Ca^{2+}]_{max} - [Ca^{2+}]_{min}} * 100$$

avec $[Ca^{2+}]_{max}$ = concentration en $Ca^{2+}$ dans le blanc Max

$[Ca^{2+}]_{min}$ = concentration en $Ca^{2+}$ dans le blanc Min

Les tableaux ci-dessous regroupent les performances inhibitrices des prélèvements décrits dans l'exemple 5 précédent et contenant les espèces polymériques relarguées.

Tableau : conditionnement à 85°C

| Matériau | Temps de relargage | Concentration en polymère dans le test | % efficacité d'inhibition CaCO3 |
|---|---|---|---|
| P2 exemple 2 | 181 | 4 | 89 |
| P2 exemple 2 | 181 | 8 | 98 |
| P2 exemple 2 | 160 | 4 | 100 |
| P2 exemple 2 | 160 | 8 | 100 |
| P1 exemple 1 | 78 | 4 | 95 |
| P1 exemple 1 | 78 | 8 | 82 |
| P2 exemple 2 | 128 | 5 | 94 |
| P2 exemple 2 | 128 | 10 | 98 |
| P2 exemple 2 | 55 | 5 | 62 |
| P2 exemple 2 | 55 | 10 | 96 |

(suite)

| Matériau | Temps de relargage | Concentration en polymère dans le test | % efficacité d'inhibition CaCO3 |
|---|---|---|---|
| P1 exemple 1 | 18 | 5 | 72 |
| P1 exemple 1 | 18 | 10 | 90 |
| P1 exemple 1 | 47 | 5 | 48 |
| P1 exemple 1 | 47 | 10 | 77 |
| P3 exemple 3 | 35 | 5 | 21 |
| P3 exemple 3 | 35 | 10 | 45 |
| P4 exemple 4 | 55 | 5 | 17 |
| P4 exemple 4 | 55 | 10 | 50 |

Tableau : conditionnement à 60°C

| matériau | Temps de relargage (jours) | Concentration en polymère dans le test | % efficacité d'inhibition CaCO3 |
|---|---|---|---|
| P2 exemple 2 | 125 | 4 | 91 |
| P2 exemple 2 | 125 | 8 | 96 |
| P4 exemple 4 | 125 | 4 | 80 |
| P4 exemple 4 | 125 | 8 | 100 |
| P3 exemple 3 | 125 | 4 | 90 |
| P3 exemple 3 | 125 | 8 | 99 |

**Revendications**

**1.** Méthode de relargage progressif de chaînes polymères au sein d'un milieu liquide de relargage (MLR), ladite méthode comprenant une étape (E) où on met en contact ledit milieu (MLR) avec des objets solides, typiquement granulaires, formés par des chaînes polymères solubles dans le milieu (MLR) et porteuses de groupements latéraux hydrophobes assurant une réticulation physique hydrophobe-hydrophobe entre lesdites chaînes polymères au sein desdits objets solides,

dans laquelle le milieu (MLR) est un milieu aqueux où les chaînes polymères relarguées sont hydrosolubles,
dans laquelle les objets solides employés dans l'étape (E) sont issus d'une étape (E0) de polymérisation radicalaire micellaire dans laquelle on met en contact, au sein d'un milieu aqueux (M) :

- des monomères (m1) éthyléniquement insaturés, solubilisés ou dispersés dans ledit milieu aqueux (M) ;
- des monomères (m2) hydrophobes éthyléniquement insaturés, sous la forme d'une solution micellaire, à savoir contenant, à l'état dispersé au sein du milieu (M), des micelles comprenant ces monomères hydrophobes, lesdits monomères (m2) étant, en tout ou partie, des monomères porteurs de chaînes hydrophobes propres à assurer la réticulation physique hydrophobe-hydrophobe recherchée dans les objets solides employés dans l'étape (E);
- au moins un amorceur de polymérisation radicalaire, de préférence hydrosoluble ou hydrodispersible ; et
- au moins un agent de contrôle de polymérisation radicalaire, l'agent de contrôle de polymérisation radicalaire étant un composé comprenant au moins un groupe thiocarbonylthio -S(C=S), par exemple un xanthate ;

dans laquelle les monomères employés dans l'étape (E0) contiennent des monomères (mR) comprenant au moins deux insaturations éthyléniques séparées par au moins un groupement clivable, le groupement clivable étant sélectionné parmi de groupes divalents -ester- ; -amide- ; -éther- ; - éther phosphate- ; - éther sulfate; carbonate; et carbamate; et
dans laquelle le rapport molaire (mR)/(m1), qui correspond à la quantité de monomères réticulants (mR)

rapportée à la quantité totale de monomères hydrophiles est supérieur à 2%.

2. Méthode selon la revendication 1, dans laquelle les chaînes polymères relarguées ont une masse moléculaire moyenne en nombre comprise entre 500 et 100 000 g/mol, telle que mesurée par GPC MALS.

3. Méthode selon la revendication 1 ou la revendication 2, dans laquelle le rapport molaire (mR)/(m1), qui correspond à la quantité de monomères réticulants (mR) rapportée à la quantité totale de monomères hydrophiles est inférieur ou égal à 30%, préférentiellement inférieur ou égal à 20%, voire inférieur ou égal à 10%.

4. Méthode selon l'une quelconque des revendications 1 à 3, dans laquelle l'étape (E) est conduite à une température supérieure ou égale à 50 °C, généralement inférieure à ou égale à 150°C, par exemple entre 60°C et 120°C.

5. Composition utile pour la mise en oeuvre de la méthode de l'une quelconque des revendications 1 à 4, comprenant des chaînes polymères hydrosolubles et porteuses de groupements latéraux hydrophobes assurant une réticulation physique hydrophobe-hydrophobe entre lesdites chaînes polymères,

   issue d'une étape (E0) de polymérisation radicalaire micellaire dans laquelle on met en contact, au sein d'un milieu aqueux (M) :

   - des monomères (m1) éthyléniquement insaturés, solubilisés ou dispersés dans ledit milieu aqueux (M) ;
   - des monomères (m2) hydrophobes éthyléniquement insaturés, sous la forme d'une solution micellaire, à savoir contenant, à l'état dispersé au sein du milieu (M), des micelles comprenant ces monomères hydrophobes, lesdits monomères (m2) étant, en tout ou partie, des monomères porteurs de chaînes hydrophobes propres à assurer la réticulation physique hydrophobe-hydrophobe recherchée dans les objets solides employés dans l'étape (E);
   - au moins un amorceur de polymérisation radicalaire, de préférence hydrosoluble ou hydrodispersible ; et
   - au moins un agent de contrôle de polymérisation radicalaire, l'agent de contrôle de polymérisation radicalaire étant un composé comprenant au moins un groupe thiocarbonylthio -S(C=S), par exemple un xanthate ;

   dans laquelle les monomères employés dans l'étape (E0) contiennent des monomères (mR) comprenant au moins deux insaturations éthyléniques séparées par au moins un groupement clivable, le groupement clivable étant sélectionné parmi les esters ; amines ; amides ; éthers ; éthers phosphates ; éthers sulfates ; carbonates et carbamates ; et
   dans laquelle le rapport molaire (mR)/(m1), qui correspond à la quantité de monomères réticulants (mR) rapportée à la quantité totale de monomères hydrophiles est supérieur à 2%.

6. Utilisation des chaînes polymères relarguées dans la méthode de relargage selon l'une quelconque des revendications 1 à 4, à titre d'agent anti-tartre, anti-clathrate, et/ou anti-corrosion.

7. Utilisation selon la revendication 6, dans laquelle le milieu (MLR) de l'étape (E) est un milieu liquide rencontré lors de l'extraction de pétrole au sein d'un réservoir hydrocarboné.

## Patentansprüche

1. Verfahren zur allmählichen Freisetzung von Polymerketten in einem flüssigen Freisetzungsmedium (FFM), wobei das Verfahren einen Schritt (S) aufweist, bei dem man das Medium (FFM) mit festen, typischerweise körnigen, Objekten, die durch Polymerketten gebildet werden, die in dem Medium (FFM) löslich sind und hydrophobe Seitengruppen tragen, die eine hydrophob-hydrophobe physikalische Vernetzung zwischen den Polymerketten in den festen Objekten gewährleisten, in Kontakt bringt,

   wobei es sich bei dem Medium (FFM) um ein wässriges Medium handelt, wobei die freigesetzten Polymerketten wasserlöslich sind,
   wobei die in Schritt (S) eingesetzten festen Objekte aus einem Schritt (S0) der mizellaren Radikalpolymerisation hervorgegangen sind, bei dem man in einem wässrigen Medium (M):

   - in dem wässrigen Medium (M) gelöste oder dispergierte ethylenisch ungesättigte Monomere (m1);

- ethylenisch ungesättigte hydrophobe Monomere (m2) in Form einer mizellaren Lösung, d. h. einer diese hydrophobe Monomere umfassende Mizellen, die in dem Medium (M) dispergiert sind, enthaltenden Lösung, wobei die Monomere (m2) ganz oder teilweise Monomere sind, die hydrophobe Ketten tragen, die zur Gewährleistung der angestrebten hydrophob-hydrophoben physikalischen Vernetzung in den in Schritt (S) eingesetzten festen Objekten geeignet sind;
- mindestens einen Radikalpolymerisationsinitiator, der vorzugsweise wasserlöslich oder wasserdispergierbar ist; und
- mindestens ein Mittel zur Steuerung der Radikalpolymerisation, wobei das Mittel zur Steuerung der Radikalpolymerisation eine Verbindung mit mindestens einer Thiocarbonylthiogruppe -S(C=S), beispielsweise ein Xanthat, ist,

in Kontakt bringt;
wobei die in Schritt (S0) eingesetzten Monomere Monomere (mR) mit mindestens zwei ethylenischen Ungesättigtheiten, die durch mindestens eine abspaltbare Gruppe getrennt sind, enthalten, wobei die spaltbare Gruppe aus zweiwertigen -Ester-; - Amid-; -Ether-; -Etherphosphat-; -Ethersulfat-; Carbonat- und Carbamatgruppen ausgewählt ist; und
wobei das molare Verhältnis (mR)/(m1), das der Menge der vernetzenden Monomere (mR), bezogen auf die Gesamtmenge der hydrophilen Monomere, entspricht, größer als 2 % ist.

**2.** Verfahren nach Anspruch 1, wobei die freigesetzten Polymerketten eine zahlenmittlere Molmasse zwischen 500 und 100.000 g/mol gemäß Messung mittels GPC-MALS aufweisen.

**3.** Verfahren nach Anspruch 1 oder Anspruch 2, wobei das molare Verhältnis (mR)/(m1), das der Menge der vernetzenden Monomere (mR), bezogen auf die Gesamtmenge der hydrophilen Monomere, entspricht, kleiner oder gleich 30 %, vorzugsweise kleiner oder gleich 20 % oder sogar kleiner oder gleich 10 % ist.

**4.** Verfahren nach einem der Ansprüche 1 bis 3, wobei der Schritt (S) bei einer Temperatur größer oder gleich 50 °C, im Allgemeinen kleiner oder gleich 150 °C, beispielsweise zwischen 60 °C und 120 °C, durchgeführt wird.

**5.** Zusammensetzung, die zur Durchführung des Verfahrens nach einem der Ansprüche 1 bis 4 verwendbar ist, umfassend wasserlösliche Polymerketten, die hydrophobe Seitengruppen tragen, die eine hydrophob-hydrophobe physikalische Vernetzung zwischen den Polymerketten gewährleisten,

hervorgegangen aus einem Schritt (S0) der mizellaren Radikalpolymerisation, bei dem man in einem wässrigen Medium (M):

- in dem wässrigen Medium (M) gelöste oder dispergierte ethylenisch ungesättigte Monomere (m1);
- ethylenisch ungesättigte hydrophobe Monomere (m2) in Form einer mizellaren Lösung, d. h. einer diese hydrophobe Monomere umfassende Mizellen, die in dem Medium (M) dispergiert sind, enthaltenden Lösung, wobei die Monomere (m2) ganz oder teilweise Monomere sind, die hydrophobe Ketten tragen, die zur Gewährleistung der angestrebten hydrophob-hydrophoben physikalischen Vernetzung in den in Schritt (S) eingesetzten festen Objekten geeignet sind;
- mindestens einen Radikalpolymerisationsinitiator, der vorzugsweise wasserlöslich oder wasserdispergierbar ist; und
- mindestens ein Mittel zur Steuerung der Radikalpolymerisation, wobei das Mittel zur Steuerung der Radikalpolymerisation eine Verbindung mit mindestens einer Thiocarbonylthiogruppe -S(C=S), beispielsweise ein Xanthat, ist,

in Kontakt bringt;
wobei die in Schritt (S0) eingesetzten Monomere Monomere (mR) mit mindestens zwei ethylenischen Ungesättigtheiten, die durch mindestens eine abspaltbare Gruppe getrennt sind, enthalten, wobei die spaltbare Gruppe aus Estern; Aminen; Amiden; Ethern; Etherphosphaten; Ethersulfaten; Carbonaten und Carbamaten ausgewählt ist; und
wobei das molare Verhältnis (mR)/(m1), das der Menge der vernetzenden Monomere (mR), bezogen auf die Gesamtmenge der hydrophilen Monomere, entspricht, größer als 2 % ist.

**6.** Verwendung der bei dem Freisetzungsverfahren nach einem der Ansprüche 1 bis 4 freigesetzten Polymerketten als Scaleinhibitor, Clathratinhibitor und/oder Korrosionsinhibitor.

7. Verwendung nach Anspruch 6, wobei das Medium (FFM) von Schritt (S) ein flüssiges Medium ist, das bei der Förderung von Öl in einem Kohlenwasserstoffreservoir anzutreffen ist.

## Claims

1. Method for the gradual release of polymer chains within a liquid release medium (LRM), said method comprising a step (S) where said medium (LRM) is brought into contact with solid objects, typically granular objects, formed by polymer chains soluble in the medium (LRM) and carrying hydrophobic side groups ensuring hydrophobic/hydrophobic physical crosslinking between said polymer chains within said solid objects,

   wherein the medium (LRM) is an aqueous medium where the released polymer chains are water-soluble, wherein the solid objects employed in step (S) result from a step (S0) of micellar radical polymerization in which the following are brought into contact, within an aqueous medium (M):

   - ethylenically unsaturated monomers (m1), dissolved or dispersed in said aqueous medium (M);
   - ethylenically unsaturated hydrophobic monomers (m2), in the form of a micellar solution, namely containing, in the dispersed state within the medium (M), micelles comprising these hydrophobic monomers, said monomers (m2) being, in all or part, monomers carrying hydrophobic chains suitable for ensuring the desired hydrophobic/hydrophobic physical crosslinking in the solid objects employed in step (S);
   - at least one radical polymerization initiator, which is preferably water-soluble or water-dispersible; and
   - at least one radical polymerization control agent, the radical polymerization control agent being a compound comprising at least one thiocarbonylthio -S(C=S) group, for example a xanthate;

   wherein the monomers employed in step (S0) contain monomers (mR) comprising at least two ethylenic unsaturations separated by at least one cleavable group, the cleavable group being selected from divalent -ester-; -amide-; -ether-; -ether phosphate-; -ether sulfate-; - carbonate- and -carbamate- groups; and wherein the molar ratio (mR)/(m1), which corresponds to the amount of crosslinking monomers (mR) with respect to the total amount of hydrophilic monomers, is greater than 2%.

2. Method according to claim 1, wherein the released polymer chains have a number-average molecular weight comprised between 500 and 100 000 g/mol, as measured by GPC-MALS.

3. Method according to claim 1 or claim 2, wherein the molar ratio (mR)/(m1), which corresponds to the amount of crosslinking monomers (mR) with respect to the total amount of hydrophilic monomers, is less than or equal to 30%, preferentially less than or equal to 20%, indeed even less than or equal to 10%.

4. Method according to any one of claims 1 to 3, wherein step (S) is carried out at a temperature of greater than or equal to 50°C, generally of less than or equal to 150°C, for example between 60°C and 120°C.

5. Composition of use for the implementation of the method according to any one of claims 1 to 4, comprising water-soluble polymer chains carrying hydrophobic side groups ensuring hydrophobic/hydrophobic physical crosslinking between said polymer chains, resulting from a step (S0) of micellar radical polymerization in which the following are brought into contact, within an aqueous medium (M):

   - ethylenically unsaturated monomers (m1), dissolved or dispersed in said aqueous medium (M);
   - ethylenically unsaturated hydrophobic monomers (m2), in the form of a micellar solution, namely containing, in the dispersed state within the medium (M), micelles comprising these hydrophobic monomers, said monomers (m2) being, in all or part, monomers carrying hydrophobic chains suitable for ensuring the desired hydrophobic/hydrophobic physical crosslinking in the solid objects employed in step (S);
   - at least one radical polymerization initiator, which is preferably water-soluble or water-dispersible; and
   - at least one radical polymerization control agent, the radical polymerization control agent being a compound comprising at least one thiocarbonylthio -S(C=S) group, for example a xanthate;

   wherein the monomers employed in step (S0) contain monomers (mR) comprising at least two ethylenic unsaturations separated by at least one cleavable group, the cleavable group being selected from esters; amines; amides; ethers; ether phosphates; ether sulfates; carbonates and carbamates; and
   wherein the molar ratio (mR)/(m1), which corresponds to the amount of crosslinking monomers (mR) with respect to the total amount of hydrophilic monomers, is greater than 2%.

**6.** Use of the polymer chains released in the method of release according to any one of claims 1 to 4, as scale-inhibiting, clathrate-inhibiting and/or corrosion-inhibiting agent.

**7.** Use according to claim 6, wherein the medium (LRM) of step (S) is a liquid medium encountered during the extraction of oil within a hydrocarbon reservoir.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- GB 2298440 A
- US 2006124301 A
- US 7196040 B
- US 7244693 B
- US 20050028976 A
- JP 2014162912 A
- WO 2013060741 A1
- EP 2457973 A1
- US 2005028976 A1
- CN 106349115 A
- US 5060728 A
- US 7332459 B
- US 7473672 B
- US 20150060062 A
- WO 9630421 A
- WO 9801478 A
- WO 9935178 A
- WO 9858974 A
- WO 0075207 A
- WO 0142312 A
- WO 9935177 A
- WO 9931144 A
- FR 2794464
- WO 0226836 A
- US 20100093874 A
- US 4565647 A
- WO 03068827 A
- WO 03068848 A
- WO 2005021612 A


### Littérature non-brevet citée dans la description


- *Macromolecular Chem. Physics*, 2001, vol. 202 (8), 1384-1397